# EUROPÄISCHE PATENTSCHRIFT

(11) **EP 3 383 790 B1**
(45) Veröffentlichungstag und Bekanntmachung des Hinweises auf die Patenterteilung: **08.01.2020**
(21) Anmeldenummer: 17735557.5
(22) Anmeldetag: 06.07.2017
(51) Int. Cl.: B66F 9/075, B62B 3/04

(54) **STÜTZROLLE, FAHRZEUG MIT STÜTZROLLE UND VERFAHREN ZUR STABILISIERUNG EINES FAHRZEUGS**
SUPPORT ROLLER, VEHICLE WITH A SUPPORT ROLLER AND METHOD FOR STABILIZING A VEHICLE
ROULETTE DE SOUTIEN, VÉHICULE ÉQUIPÉ D'UNE ROULETTE DE SOUTIEN ET PROCÉDÉ DE STABILISATION D'UN VÉHICULE

(30) Priorität: 07.07.2016 DE 102016112511
(43) Veröffentlichungstag der Anmeldung: 10.10.2018
(73) Patentinhaber: Blickle Räder + Rollen GmbH & Co.KG, 72348 Rosenfeld (DE)
(72) Erfinder: HÖLLE, Rolf, 72348 Rosenfeld (DE)
(74) Vertreter: Holzwarth-Rochford, Andreas
(86) Internationale Anmeldenummer: PCT/EP2017/067038
(87) Internationale Veröffentlichungsnummer: WO 2018/007566

(56) Entgegenhaltungen:
- EP-A2- 2 500 237
- DE-A1- 19 753 412
- JP-A- 2004 010 292
- JP-A- 2006 089 214

## Beschreibung

Die vorliegende Erfindung betrifft eine Stützrolle zur Abstützung eines Fahrzeugs auf einem Untergrund, umfassend zumindest ein zumindest indirekt mit zumindest einer Tragstruktur des Fahrzeugs verbindbares Lagerelement, zumindest eine mit dem Lagerelement verbundene Gabel und zumindest ein in der Gabel um eine erste Rollachse drehbar gelagertes und in Kontakt mit dem Untergrund bringbares Rad. Auch betrifft die vorliegende Erfindung ein Fahrzeug mit einer solchen Stützrolle sowie ein Verfahren zum Stabilisieren eines Fahrzeugs.

Aus dem Stand der Technik sind verschiedenste Fahrzeuge zum Transport von Lasten bekannt. Beispielsweise laufen Flurförderzeuge mit Rollen auf einem Untergrund, Boden, oder Flur, können gelenkt werden und werden meist zum innerbetrieblichen Transport verwendet. Abhängig von der jeweiligen Bauart können Flurförderzeuge auch zum Heben und Stapeln von Lasten verwendet werden. Eine bekannte Bauart verwendet ein Fünfradfahrwerk, wobei ein Antriebsrad das Flurförderzeug antreibt und Stützrollen für die Stabilität des Flurförderzeugs sorgen. Diese Stützrollen sollen dem Flurförderzeug hauptsächlich seitliche Stabilität gegen Umkippen verleihen. Die Gefahr des Umkippens besteht beispielsweise bei engen Kurvenfahrten und dem gleichzeitigen Anheben und Transport von Lasten, wobei der Schwerpunkt des Flurförderzeugs ungünstigerweise von dem Untergrund auf dem das Flurförderzeug bewegt wird in Richtung Last verschoben wird. Als Stabilisationselement zur Begrenzung der Seitenneigung ist aus dem Stand der Technik der Einsatz einer federgelagerten um eine Drehachse drehbare Achse, einer sogenannten Koppelschwinge, bekannt, an deren Endbereichen Stützrollen angeordnet sind. Beispielsweise die nicht vorveröffentlichte DE 20 2015 103 436.9 beschreibt eine solche Koppelschwinge. Aufgabe der Koppelschwinge ist es, die Stützkraft entsprechend der Fahrsituation gleichmäßig auf die Stützrollen zu verteilen. EP 2 500 237 A offenbart den Oberbegriff des Anspruchs 1. EP 2 500 237 A offenbart ein Verfahren zum Stabilisieren eines Fahrzeugs, in dem zwei Kraftwerte erkannt und verglichen werden.

Allerdings haben die aus dem Stand der Technik bekannten Lösungen den Nachteil, dass wenn sich das Fahrzeug zu einer Seite neigt, die Koppelschwinge nach oben, in entgegengesetzter Richtung zu dem Untergrund bewegt, bzw. gedreht, wird, so dass die gesamte Federkraft der Koppelschwinge lediglich auf eine Stützrolle wirkt, wobei die andere Stützrolle an der Koppelschwinge entsprechend entlastet wird und in einem Abstand zu dem Untergrund gehalten wird.

Aufgabe der vorliegenden Erfindung ist es daher, eine Stützrolle bereitzustellen, die bei Verwendung in einem Fahrzeug, insbesondere einem Flurförderzeug, die Erreichung einer gesteigerten Stabilität ermöglicht, so dass die Nachteile des Stands der Technik überwunden werden, insbesondere ein übermäßiges Neigen des Flurförderzeugs verhindert und somit die Gefahr des Umkippens reduziert.

Diese Aufgabe wird erfindungsgemäß gelöst durch die Merkmale der Ansprüche 1 und 16. Vorgesehen ist unter anderem eine Sensiereinrichtung zur Erfassung zumindest einer Abstützkraft, mit der das Rad sich auf dem Untergrund abstützt. Dabei kann vorgesehen sein, dass die Rollachse senkrecht zu einer Normalenrichtung des Untergrunds verläuft und/oder die Tragstruktur zumindest bereichsweise durch ein Karosserieteil des Fahrzeugs gebildet ist.

Weiterhin wird vorgeschlagen, dass das Lagerelement in Form zumindest eines Drehlagers ausgebildet ist und mittels des Drehlagers eine Drehung der Gabel um eine im wesentlichen senkrecht zu der Rollachse verlaufende Schwenkachse möglich ist, wobei insbesondere sich die Rollachse und die Schwenkachse schneiden oder windschief zueinander verlaufen und/oder die Gabel und/oder die Rollachse mittels zumindest einer ersten Rückstelleinrichtung in zumindest eine vorbestimmte Lage relativ zu dem Lagerelement und/oder der Tragstruktur, vorzugsweise bezüglich der Schwenkachse, zwingbar ist.

Auch ist bevorzugt, dass mittels der Sensiereinrichtung eine Bewegung zumindest eines ersten Elements relativ zu zumindest einem zweiten Element erfassbar ist, vorzugsweise eine, insbesondere lineare, Bewegung in eine erste Richtung, die senkrecht zu der Rollachse und/oder parallel zu der Schwenkachse, verläuft, erfassbar ist.

Bei der vorgenannten Ausführungsform ist besonders bevorzugt, dass das erste Element ausgewählt ist aus der Gruppe umfassend die Rolle, eine in der Gabel gelagerte Lagerachse der Rolle, die Gabel, zumindest ein Verbindungsmittel der Gabel mit dem Lagerelement, wie einem Zapfen, und das Lagerelement, und/oder das zweite Element ausgewählt ist aus der Gruppe umfassend die Lagerachse, die Gabel, das Verbindungsmittel, das Lagerelement und die Tragstruktur.

Für die beiden vorgenannten Ausführungsformen wird auch vorgeschlagen, dass das zweite Element, insbesondere das Lagerelement, angepasst ist, das erste Element, insbesondere die Gabel, entlang der ersten Richtung beweglich zu halten, vorzugsweise ist das zweite Element angepasst, eine Bewegung des ersten Elements von bis zu 5 mm, insbesondere von 3 mm, vorzugsweise relativ zu dem zweiten Element, zu ermöglichen.

Weiterhin kann eine erfindungsgemäße Stützrolle dadurch gekennzeichnet, dass das erste Element, insbesondere die Gabel und/oder das Verbindungsmittel mittels zumindest einer zweiten Rückstelleleinrichtung in eine erste Position, insbesondere in eine Richtung auf das zweite Element zu, zwingbar ist.

Auch ist bevorzugt, dass die erste Rückstelleleinrichtung und/oder die zweite Rückstelleinrichtung zumindest ein elastisches Mittel, zumindest eine Druckfeder, zumindest eine Schraubenfeder, zumindest eine pneumatische Feder, zumindest eine hydraulische Feder und/oder zumindest eine Gasdruckfeder umfasst bzw. umfassen.

Bevorzugte Ausführungsformen der Erfindung sehen vor, dass die Sensiereinrichtung auf der der Gabel und/oder dem Rad abgewandten Seite des Lagerelements, vorzugsweise des Drehlagers, angeordnet ist.

Eine erfindungsgemäße Stützrolle kann auch gekennzeichnet sein durch zumindest eine Positionserkennungseinrichtung, mittels der eine Ausrichtung der Gabel, der Lagerachse und/oder des Rads um die Schwenkachse und/oder relativ zu dem Untergrund bestimmbar ist.

Eine erfindungsgemäße Stützrolle kann schließlich dadurch gekennzeichnet sein, dass die Sensiereinrichtung und/oder die Positionserkennungseinrichtung zumindest ein Sensormittel, insbesondere umfassend zumindest einen Endlagenschalter, zumindest einen Dehnungsmesssenor, zumindest einen Drucksensor, zumindest einen Hall-Sensor, zumindest einen Radar-Sensor, zumindest einen Ultraschallsensor, zumindest einen Abstandsensor, zumindest einen Echolot-Sensor, zumindest einen akustischen Sensor, zumindest einen optischen Sensor, zumindest einen elektromagnetischen Sensor, und/oder zumindest einen magnetischen Sensor umfasst bzw. umfassen und/oder mittels der Sensiereinrichtung die erste Position und/oder zumindest eine zweite Position des ersten Elements relativ zu dem zweiten Element erfassbar ist.

Weiterhin liefert die Erfindung ein Fahrzeug, insbesondere Flurförderfahrzeug, umfassend zumindest eine erfindungsgemäße Stützrolle.

Mit der Erfindung wird dabei vorgeschlagen, dass das Fahrzeug ferner zumindest eine Koppelschwinge umfasst, wobei die Koppelschwinge mechanisch zwischen der Tragstruktur und der Stützrolle angeordnet ist und die Koppelschwinge zumindest eine um zumindest eine Drehachse drehbar gelagerte Wippe sowie ein mit der Wippe in Wirkverbindung stehender Hebel aufweist, wobei sich die Stützrolle, insbesondere das Lagerelement, an der der Schwenkachse und/oder der Wippe abgewandten Ende des Hebels abstützt, wobei ferner vorzugsweise der Hebelel von der Wippe umfasst ist und/oder zumindest bereichsweise einstückig mit der Wippe ausgebildet ist.

Hierbei ist besonders bevorzugt, dass die Koppelschwinge zumindest eine dritte Rückstelleinrichtung umfasst, mittels dem die Wippe und/oder der Hebel in zumindest eine dritte Position zwingbar ist, wobei die dritte Rückstelleleinrichtung vorzugsweise zumindest eine Torsionsfeder, zumindest eine Schraubenfeder, zumindest eine Zugfeder, zumindest eine Schubfeder, zumindest eine Scherfeder, zumindest ein gummielastisches Element, zumindest eine Schneckenfeder und/oder zumindest eine Gasdruckfeder umfasst.

Bei den beiden vorgenannten Ausführungsformen ist besonders bevorzugt, dass die Koppelschwinge zumindest eine Dämpfungsvorrichtung umfasst, wobei mittels der Dämpfungsvorrichtung eine Bewegung, insbesondere des Hebels, der Stützrolle und/oder der Wippe, um die Drehachse dämpfbar ist.

Weiterhin kann ein erfindungsgemäßes Fahrzeug gekennzeichnet sein durch zumindest ein, insbesondere mit der Dämpfungsvorrichtung in Wirkverbindung stehendes, Steuerorgan, wobei mittels des Steuerorgans eine Bewegung, insbesondere des Hebels, der Stützrolle und/oder der Wippe, um die Drehachse reduzierbar, vorzugsweise unterbindbar ist, wobei vorzugsweise das Steuerorgan zumindest bereichsweise von der Dämpfungsvorrichtung umfasst ist.

Auch wird mit der Erfindung vorgeschlagen, dass die Dämpfungsvorrichtung und/oder das Steuerorgan zumindest einen Zylinder, insbesondere einen Hydraulikzylinder, mit zumindest einem innerhalb des Zylinders bewegbaren Kolben umfasst, wobei der Zylinder mit dem Hebel, der Stützrolle, insbesondere dem Lagerelement, und/oder der Wippe, vorzugsweise über ein sich zumindest in eine radiale Richtung bezüglich der Drehachse erstreckendes Verbindungselement, und der Kolben mit der Tragstruktur oder der Kolben mit dem Hebel, der Wippe, der Stützrolle, dem Lagerelement und/oder dem Verbindungselement und der Zylinder mit der Tragstruktur in Wirkverbindung steht.

Bei der vorgenannten Ausführungsform ist besonders bevorzugt, dass das Steuerorgan zumindest ein Steuerelement umfasst, wobei das Steuerelement vorzugsweise zumindest ein Steuerventil umfasst und/oder mittels eines Schließen des Steuerelements eine Bewegung der Dämpfungsvorrichtung und/oder des Steuerorgans und/oder eine Bewegung, insbesondere der Wippe, des Hebels und/oder der Stützrolle, um die Drehachse unterbunden ist und bei einem Öffnen des Steuerelements eine Bewegung der Dämpfungsvorrichtung und/oder des Steuerorgans und/oder eine Bewegung, insbesondere der Wippe, des Hebels und/oder der Stützrolle, um die Drehachse freigegeben ist.

Weiterhin schlägt die Erfindung vor, dass ein erfindungsgemäßes Fahrzeug gekennzeichnet ist dadurch, dass der Zylinder vorzugsweise einen einfach wirkenden Zylinder umfasst und das Steuerelement ein Drosselelement umfasst, das angepasst ist die Durchflussmenge zumindest eines Fluids, vorzugsweise eine Hydraulikflüssigkeit, ein Gas und/oder Luft in den Zylinder zu steuern, vorzugsweise um eine Dämpfung zu ermöglichen, wobei vorzugsweise das Steuerelement angepasst ist, in Abhängigkeit von der mittels der Sensiereinrichtung erfassten Abstützkraft das Drosselelement zu steuern, um den Fluiddruck zu erhöhen, um eine Reduzierung der Abstützkraft unter einen vorbestimmten Wert zu vermeiden.

Auch schlägt die Erfindung vor, dass der Zylinder, insbesondere der Hydraulikzylinder, zumindest zwei über zumindest eine Drossel miteinander verbindbare Zylinderkammern umfasst, wobei insbesondere zwischen den Zylinderkammern, insbesondere durch Bewegung des Kolbens das Fluid bewegbar ist.

Weiterhin schlägt die Erfindung vor, dass das Steuerorgan zumindest ein Bremsmittel, insbesondere eine elektromagnetische Bremse, eine mechanische Bremse, eine haft- und/oder formschlüssig arbeitende Bremse umfasst, wobei das Bremsmittel, vorzugsweise einerseits mit der Wippe und/oder der Stützrolle und/oder andererseits mit der Tragstruktur in Wirkverbindung steht.

Bei der vorgenannten Ausführungsform ist besonders bevorzugt, dass das Bremsmittel, zumindest bereichsweise, vorzugsweise zirkular umlaufend um die Drehachse der Koppelschwinge angeordnet ist.

Weiterhin wird mit der Erfindung vorgeschlagen, dass zumindest eine mit dem Steuerorgan und/oder der Dämpfungsvorrichtung in Wirkverbindung stehende Steuereinrichtung, wobei die Steuereinrichtung zumindest eine Energieversorgung, insbesondere elektrische Spannungsversorgung und/oder eine Vorrichtung zur Speicherung und/oder Abgabe mechanischer Energie, des Bremsmittels umfasst, und wobei bei Abgabe von Energie von der Steuereinrichtung an das Steuerorgan eine Bewegung der Dämpfungsvorrichtung und/oder des Steuerorgans und/oder eine Bewegung, insbesondere der Wippe und /oder der Stützrolle, um die Drehachse unterbunden ist und bei einem Unterbrechen der Energieabgabe eine Bewegung der Dämpfungsvorrichtung und/oder des Steuerorgans und/oder eine Bewegung, insbesondere der Wippe und/oder der Stützrolle, um die Drehachse freigegeben ist.

Weiterhin schlägt die Erfindung vor, dass ein erfindungsgemäßes Fahrzeug gekennzeichnet ist durch zumindest eine mit der Sensiereinrichtung, der Positionserkennungseinrichtung, der Steuereinrichtung und/oder dem Steuerorgan, vorzugsweise dem Steuerelement, in Wirkverbindung stehende Steuervorrichtung, wobei vorzugsweise mittels der Steuervorrichtung das Steuerorgan derartig beeinflussbar ist, dass die Bewegung um die Drehachse reduziert, vorzugsweise unterbunden ist, wenn mittels der Sensiereinrichtung eine Abstützkraft sensiert wird, die einem fehlenden Kontakt zwischen der Stützrolle und dem Untergrund entspricht und/oder die Bewegung um die Drehachse zumindest teilweise freigegeben wird, wenn mittels der Sensiereinrichtung eine Abstützkraft sensiert wird, die einem bestehenden Kontakt zwischen der Stützrolle und dem Untergrund entspricht.

Bei der vorgenannten Ausführungsform ist besonders bevorzugt, dass die Steuervorrichtung das Steuerorgan in Abhängigkeit von einer Position zumindest einer Hubgabel des Fahrzeugs, insbesondere relativ zu dem Untergrund, einer Geschwindigkeit des Fahrzeugs und/oder eines Lenkwinkels des Fahrzeugs beeinflusst.

Weiterhin wird mit der Erfindung vorgeschlagen, dass das Steuerorgan zumindest ein Pumpenmittel zum Erhöhen eines Fluiddrucks in dem Zylinder, insbesondere den Zylinderkammern, umfasst, wobei vorzugsweise die Steuervorrichtung angepasst ist, in Abhängigkeit von der mittels der Sensiereinrichtung erfassten Abstützkraft das Pumpenmittel zu steuern, um den Fluiddruck zu erhöhen, um eine Reduzierung der Abstützkraft unter einen vorbestimmten Wert zu vermeiden.

Besonders bevorzugte Ausführungsformen des Fahrzeugs können gekennzeichnet sein durch eine Vielzahl von Stützrollen nach einem der Ansprüche 1 bis 11, wobei die Koppelschwinge vorzugsweise eine Vielzahl von, vorzugsweise an der Wippe angeordneten, von der Wippe umfassten und/oder zumindest bereichsweise einstückig mit der Wippe ausgebildeten Hebeln umfasst.

Schließlich wird für das erfindungsgemäße Fahrzeug vorgeschlagen, dass das Fahrzeug als Flurförderzeug und/oder als Gabelhubwagen mit zumindest einem Antriebsrad, insbesondere einen Gabelhubwagen mit Fünfradfahrwerk, ausgebildet ist.

Schließlich liefert die Erfindung ein Verfahren zum Stabilisieren eines Fahrzeugs, insbesondere eines erfindungsgemäßen Fahrzeugs, mit einer Koppelschwinge und zumindest einer Stützrolle, insbesondere einer erfindungsgemäßen Stützrolle, mit den Schritten:
Erkennen einer Abstützkraft, mit der sich die Stützrolle auf einem Untergrund abstützt, wobei bei zumindest einer ersten Abstützkraft die Stützrolle in Kontakt mit dem Untergrund steht, und bei zumindest einer zweiten Abstützkraft die Stützrolle in keinem Kontakt mit dem Untergrund steht; und Steuern eines Steuerorgans in Abhängigkeit der erkannten Abstützkraft, wobei mittels des Steuerorgans bei Erkennen der zweiten Abstützkraft eine Drehung der Koppelschwinge und/oder der Stützrolle um eine Drehachse zumindest teilweise unterbunden wird.

Mit der Erfindung wird für das Verfahren auch vorgeschlagen, dass bei Erkennen der ersten Abstützkraft eine Bewegung um die Drehachse mittels zumindest einer Dämpfungsvorrichtung gedämpft wird.

Bei den beiden vorgenannten Ausführungsformen ist besonders bevorzugt, dass das Dämpfen und das Unterbinden der Bewegung um die Drehachse mittels einer Vorrichtung, die zumindest bereichsweise das Steuerorgan und die Dämpfungsvorrichtung umfasst, durchgeführt wird, insbesondere die Dämpfungsvorrichtung und das Steuerorgan zumindest bereichsweise einstückig ausgebildet werden.

Schließlich wird für das Verfahren vorgeschlagen, dass die Unterbindung der Bewegung um die Drehachse durch Unterbinden einer Bewegung der Dämpfungsvorrichtung und/oder zumindest einer dritten Rückstelleinrichtung erreicht wird.

Mit dem Begriff "Karosserieteil" bzw. "Tragstruktur" kann auch ein Anbau an eine Komponente des Fahrzeugs bezeichnet werden.

Der Erfindung liegt somit die überraschende Erkenntnis zu Grunde, dass durch Bereitstellung einer Stützrolle, die es ermöglicht eine Abstützkraft, mit der sich ein Rad der Stützrolle auf einem Untergrund abstützt, zu bestimmen, die Stabilität eines Fahrzeugs, in dem die Stützrolle verbaut ist, dadurch gesteigert werden kann, dass eine Neigung des Fahrzeugs, insbesondere eines Flurförderzeugs begrenzt werden kann.

Dies bedeutet, dass einer Neigung des Fahrzeugs proaktiv entgegengewirkt werden kann, bevor die Neigung so kritisch wird, dass das Fahrzeug umfallen könnte. Dieser Effekt wird insbesondere dadurch erreicht, dass die erfindungsgemäße Stützrolle mit einer Koppelschwinge kombiniert wird und eine Drehbewegung der Koppelschwinge um eine Drehachse dann begrenzt wird, wenn die Stützrolle sich von dem Untergrund abhebt. Dies wird dadurch erfasst, dass mittels der erfindungsgemäßen Sensiereinrichtung einer Abstützkraft detektiert wird, die unterhalb eines Schwellenwerts liegt, so dass auf ein Abheben der Stützrolle von dem Untergrund geschlossen werden kann. Diese Begrenzung der Drehbewegung der Koppelschwinge kann insbesondere dadurch erreicht werden, dass das Verhalten einer Dämpfungsvorrichtung verändert wird. Auch ist vorstellbar, dass ein Steuerorgan eingesetzt wird, welches die Drehbewegung der Koppelschwinge begrenzt, beispielsweise durch Einsatz einer mechanischen Arretierung in zumindest einer vorbestimmten vorzugsweise einer Vielzahl von Positionen der Koppelschwinge um die Drehachse. Dieser Effekt der Begrenzung bzw. Sperrung der Drehbewegung der Koppelschwinge um die Drehachse wird vorzugsweise durch eine Zylinderanlenkung an der Koppelschwinge erreicht, wodurch die Neigung des Fahrzeugs begrenzt werden kann.

Im Sinne der Erfindung wird der Begriff "Untergrund" verwendet, um insbesondere den Boden zu bezeichnen, auf dem sich die Stützrolle abstützt bzw. auf dem das Fahrzeug bewegt wird. Der Begriff "die Stützrolle keinen Kontakt mit dem Untergrund hat" kann daher verwendet werden, um zu definieren, dass sich die Stützrolle frei in der Luft befindet und das Flurförderzeug keine Stützlast auf die Stützrolle ausübt. Diese Position der Stützrolle wird dadurch erkannt, dass mittels der Sensiereinrichtung erfasst wird, dass die Abstützkraft unterhalb eines vorbestimmten Schwellenwerts liegt. Ein Kontakt mit dem Untergrund liegt dann vor, wenn die sensierte Abstützkraft einen vorbestimmten Schwellenwert übersteigt. Der Begriff "Bewegung um die Drehachse dämpfen" wird insbesondere verwendet, um eine gedämpfte Auf- und Abbewegung der Koppelschwinge oder eine Federung der Koppelschwinge zu bezeichnen. Der Begriff "federgelagert angeordnet" kann erfindungsgemäß verwendet werden, um zu definieren, dass die Koppelschwinge so an einem tragenden Karosserieteil angeordnet ist, dass sie zumindest in vertikaler Richtung beweglich, bzw. federnd ist. Die Federlagerung kann durch eine federnde Aufhängung der Koppelschwinge und/oder durch den Hydraulikzylinder bzw. eine zusätzliche Rückstelleinrichtung, wie eine Torsionsfeder erreicht werden.

Die Erkennung, ob das Fahrzeug neutral steht oder geneigt ist, kann einfach mittels Erkennung des Untergrundkontakts der Stützrollen durch Sensierung der Abstützkraft durchgeführt werden.

Erfindungsgemäß kann die Stützrolle eine Bockrolle darstellen. Bei einer solchen Bockrolle ist das Lagerelement so ausgestaltet, dass eine Drehung der Gabel bzw. des Rads um die Schwenkachse relativ zu dem Lagerelement unterbunden ist. Alternativ kann die Stützrolle auch als freidrehbare Stützrolle ausgebildet sein, bei welcher dann das Lagerelement die Form eines Drehlagers aufweist und eine Drehung der Gabel bzw. des Rads um die Schwenkachse ermöglicht. Die Stützrolle kann auch als zwangsgelenkte Rolle ausgebildet sein. Damit ist gemeint, dass eine Position der Gabel bzw. des Rads um die Schwenkachse mittels einer Aktuatoreinrichtung gesteuert bzw. geregelt verändert werden kann. Auch kann die erfindungsgemäße Stützrolle grundsätzlich frei schwenkbar sein jedoch mittels einer ersten Rückstelleinrichtung, insbesondere einer Spiralfeder in zumindest eine vorbestimmte Position, beispielsweise eine gerade Ausfahrtposition des Fahrzeugs gezwungen werden. Insbesondere wird die Stützrolle so, wenn sie Kontakt mit dem Untergrund hat, gegen die Kraft der ersten Rückstelleinrichtung in die Fahrtrichtung gezwungen werden. Verliert die Stützrolle jedoch den Kontakt zum Untergrund schwenkt diese durch die erste Rückstelleinrichtung in die Neutralstellung. Diese Bewegung kann über die Sensiereinrichtung erkannt und so auf die fehlende Abstützkraft geschlossen werden.

Bevorzugt wird mittels der Sensiereinrichtung die Abstützkraft indirekt gemessen. So kann vorgesehen sein, dass die Gabel relativ zu dem Lagerelement bewegbar gelagert ist, jedoch mittels einer zweiten Rückstelleinrichtung in eine vorbestimmte Position gezwungen wird. Kommt es dann zu einer Bewegung der Gabel relativ zu dem Lagerelement, erfolgt diese Bewegung gegen die durch die zweite Rückstelleinrichtung aufgebaute Kraft. Die Bestimmung der relativen Bewegung zwischen der Gabel und dem Lagerelement kann dann auf die auf die Stützrolle wirkende Kraft geschlossen werden. Insbesondere bewirkt die zweite Rückstelleinrichtung, dass die Gabel gegen das Lagerelement gezwungen wird, wenn sich die Stützrolle nicht im Kontakt mit dem Untergrund befindet und wenn ein Kontakt vorliegt gegen die durch die zweite Rückstelleinrichtung aufgebaute Kraft die Gabel relativ zu dem Lagerelement bewegt wird.

Der zuvor beschriebene Mechanismus ist jedoch nicht auf eine Bewegung der Gabel relativ zu dem Lagerelement beschränkt, sondern es kann im wesentlichen jede Relativbewegung zwischen Einzelkomponenten der Stützrolle dazu genutzt werden, um die Abstützkraft zu bestimmen. Ergänzend bzw. alternativ zu dem zuvor beschriebenen Mechanismus kann auch eine Abstützkraft indirekt dadurch bestimmt werden, dass mittels einer Positionserkennungseinrichtung die Ausrichtung der Gabel um die Schwenkachse bestimmt wird. Verändert sich diese Ausrichtung kontinuierlich kann davon ausgegangen werden, dass eine erhöhte Abstützkraft vorliegt und die Stützrolle in Kontakt mit dem Untergrund ist. Dies gilt insbesondere dann, wenn die Gabel mittels der ersten Rückstelleinrichtung in eine vorbestimmte Position gezwungen wird. Wird die Stützrolle aus der vorbestimmten Position ausgelenkt liegt ein Kontakt mit dem Untergrund vor und es kann so auf eine entsprechend vorherrschende Abstützkraft geschlossen werden. Als Dämpfungsvorrichtung, die auch gleichzeitig die Funktion eines Steuerorgans übernimmt, kann insbesondere ein Hydraulikzylinder vorgesehen sein. Dieser Hydraulikzylinder wird vorzugsweise mittels eines Hebels mit der Koppelschwinge, insbesondere der Wippe verbunden und stützt sich andererseits an der Tragstruktur ab. Kommt es zu einer Bewegung der Koppelschwinge, bzw. Wippe um die Drehachse wird mittels des Hydraulikzylinders diese Bewegung gedämpft. Die Dämpfungsvorrichtung kann selber eine dritte Rückstelleleinrichtung darstellen, mittels dem die Koppelschwinge in eine dritte Position gezwungen wird es kann jedoch auch vorgesehen sein, dass eine getrennte dritte Rückstelleinrichtung, insbesondere eine Torsionsfeder vorgesehen ist, um diese Funktion zu erreichen. Die Verwendung eines Hydraulikzylinders bietet den Vorteil, dass durch diesen auch das Steuerorgan selber gebildet werden kann. Üblicherweise wird bei einem derartigen Hydraulikzylinder eine Dämpfung dadurch erreicht, dass bei einer Bewegung des Kolbens innerhalb des Zylinders ein Fluid von einer Zylinderkammer in eine andere Zylinderkammer über eine Drossel geführt wird. Die Drossel kann nun als ein steuerbares Ventil ausgebildet sein, so dass ein Fluss des Fluides von der einen Zylinderkammer in die andere unterbunden ist und so die Hydraulikzylinder der Bewegung der Koppelschwinge um die Drehachse vollständig sperrt. Durch diese Sperrung wird verhindert, dass es zu einer weiteren Drehung der Koppelschwinge kommt, die es ermöglichen könnte, dass die Stützrolle, die im Bodenkontakt ist, tiefer eintaucht und so es zu einem Umkippen des Fahrzeugs kommen könnte. In die Steuerung des Steuerorgans können auch andere weitere Parameter neben der Abstützkraft einfließen.

So können auch noch zusätzliche Parameter, wie die Position der Lenkgabel des Flurförderzeugs, die Geschwindigkeit, und/oder der Lenkwinkel in die Berechnung, ob die Bewegung der Koppelschwinge um die Drehachse gesperrt werden soll, hineinfließen, um eine möglichst hohe Sicherheit bei gleichzeitig guten Fahreigenschaften zu erreichen.

Auch kann in einer Ausführungsform vorteilhaft durch den Einsatz eines Drosselelements und/oder Pumpenmittels zum Erhöhen des Fluiddrucks zusätzlich dem Umkippen entgegengewirkt werden. So wird durch die Erhöhung des Drucks innerhalb der Zylinderkammern erreicht, dass eine Bewegung der Koppelschwinge eine höhere Gegenkraft entgegengesetzt wird.

Weitere Merkmale und Vorteile der Erfindung ergeben sich aus der nachfolgenden Beschreibung, in der bevorzugte Ausführungsformen der Erfindung anhand von schematischen Zeichnungen erläutert sind.

Dabei zeigt:
- Figur 1a, 1b: schematische Frontansichten eines aus dem Stand der Technik bekannten Flurförderzeugs in neutraler und geneigter Fahrzeugstellung;
- Figur 2: eine schematische Schnittansicht einer aus dem Stand der Technik bekannten Stützrolle;
- Figur 3a, 3b: schematische Schnittansichten einer Stützrolle gemäß einer Ausführungsform der Erfindung in einem unbelasteten und einem belasteten Zustand;
- Figur 4: eine schematische Ansicht einer Koppelschwinge mit einer ersten und einer zweiten Stützrolle und eines Hydraulikzylinders gemäß einer Ausführungsform der Erfindung;
- Figur 5a, 5b: Hydraulikschaltpläne zur Ansteuerung des Hydraulikzylinders gemäß Ausführungsformen der Erfindung;
- Figur 6: eine schematische Ansicht einer Koppelschwinge mit einer ersten und einer zweiten Stützrolle und eines Bremsmittels gemäß einer Ausführungsform der Erfindung;
- Figur 7: einen Schaltplan zur elektrischen Ansteuerung des Hydraulikventils gemäß Ausführungsformen der Erfindung; und
- Figur 8: ein Flussdiagramm das die Durchführung eines Verfahrens zum Stabilisieren eines Flurförderzeugs gemäß einer Ausführungsform der Erfindung, visualisiert.

In Figur la ist eine schematische Frontansicht eines aus dem Stand der Technik bekannten Fahrzeugs in Form eines Flurförderzeugs 1 gezeigt. Das beispielhaft gezeigte Flurförderzeug 1 ist ein Gabelhubwagen mit Fünfradfahrwerk, wobei in Figur la lediglich die erste und die zweite Stützrolle 3, 3' und das Antriebsrad 5 die jeweils mit einer Tragstruktur 4 des Flurförderfahrzeugs 1 verbunden sind, gezeigt werden. Bei dem in Figur la gezeigten Flurförderzeug 1, befindet sich das Antriebsrad 5 im Wesentlichen mittig zwischen der ersten und der zweiten Stützrolle 3, 3'. Die erste und die zweite Stützrolle 3, 3' sind an einer Koppelschwinge (nicht gezeigt) befestigt und über diese Koppelschwinge miteinander verbunden. Die Koppelschwinge ist üblicherweise im Stand der Technik federgelagert an der Tragstruktur des Flurförderzeugs 1 befestigt und hat die Aufgabe, die Stützkraft entsprechend der Fahrsituation gleichmäßig auf die erste und die zweite Stützrolle 3, 3' zu verteilen.

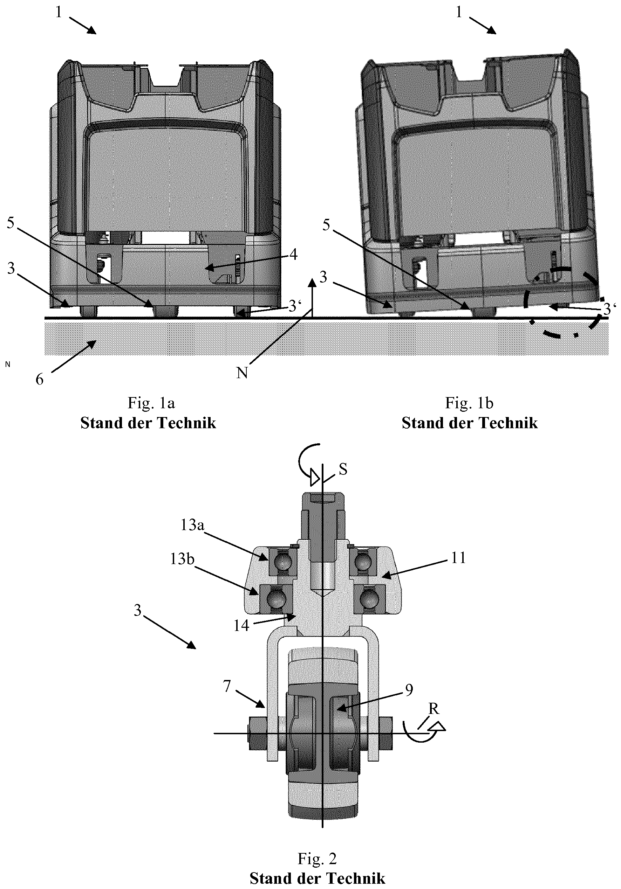

In Figur 1b ist eine schematische Ansicht des in Figur la gezeigten Flurförderzeugs 1 in einer geneigten Stellung gezeigt. Das Flurförderzeug 1 kann sich beispielsweise bei engen Kurvendurchfahrten mit hochgehalten Lasten entsprechend neigen. Neigt sich das Flurförderzeug 1 zur Seite, wird die Koppelschwinge um eine Drehachse gedreht und die gesamte Federkraft der Koppelschwinge wirkt in dem gezeigten Beispiel auf die erste Stützrolle 3. Die zweite Stützrolle 3' wird entsprechend entlastet und verliert den Kontakt zu einem Untergrund 6, auf dem das Flurförderzeug 1 bewegt wird (gezeigt in Figur 1b mit einer gestrichelten Umrandung). Wenn sich nun das Flurförderzeug 1 weiter neigt, insbesondere sich die Stützrolle 3' weiter in der Normalenrichtung N des Untergrunds 6 bewegt, besteht die Gefahr des Umkippens. In dieser in Figur 1b dargestellten Situation liegt die Abstützkraft, mit der sich die Stützrolle 3' auf dem Untergrund 6 abstützt, unterhalb eines ersten Schwellenwerts, da die Stützrolle 3' nicht den Untergrund 6 berührt, die Stützrolle 3' also frei in der Luft ist.

Die Abstützkraft der Stützrolle 3 liegt hingegen über einem Schwellenwert, da die Stützrolle 3 im Kontakt mit dem Untergrund 6 steht.

In Figur 2 wird eine schematische Schnittansicht einer aus dem Stand der Technik bekannten Stützrolle 3 gezeigt. Die Stützrolle 3 umfasst eine Gabel, die als Halterung zur Aufnahme eines Rads 9 bestimmt ist. Das Rad 9 ist um eine Rollachse R drehbar in der Gabel gehalten. Mittels eines als Drehlager 11 ausgebildeten Lagers kann die als Lenkgabel 7 ausgebildete Gabel mit dem Rad 9 um eine Schwenkachse S drehbar um die eigene Achse mittels der Koppelschwinge (nicht gezeigt) an der Tragstruktur des Flurförderzeugs (nicht gezeigt) gehalten werden. In der gezeigten Stützrolle 3 sind hierfür zwei Kugellager 13a, 13b um den Zapfen 14 der Gabel 7 angeordnet. Über das Drehlager 11 wird das Rad 9 an der Koppelschwinge (nicht gezeigt) befestigt, damit das Rad 9 bei Kurvendurchfahrten mitlenken kann.

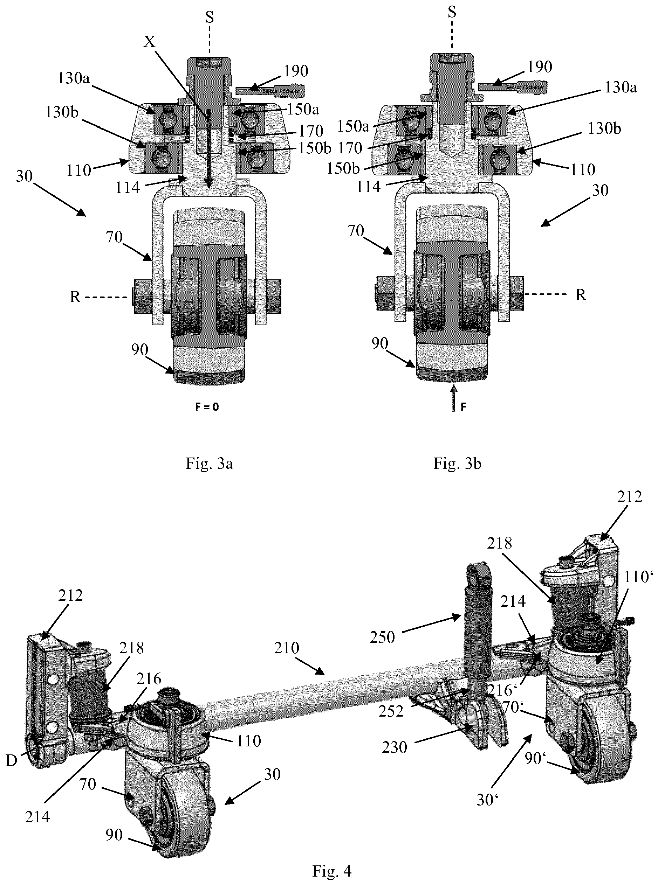

Figur 3a zeigt eine schematische Schnittansicht einer Stützrolle 30 gemäß einer Ausführungsform der Erfindung in einem unbelasteten Zustand. Dies bedeutet, dass die Abstützkraft unterhalb des ersten Schwellenwerts liegt, also die Stützrolle 30 insbesondere nicht in Kontakt mit dem Untergrund steht. Wie es in der Figur 3a gezeigt wird, entsprechen viele Merkmale der Stützrolle 30 den Merkmalen der in Figur 2 gezeigten Stand der Technik Stützrolle. Im Gegensatz zu der aus dem Stand der Technik bekannten Stützrolle, ist in der gezeigten Ausführungsform das Rad 90 über die Lenkgabel 70 nicht nur um die Schwenkachse S drehbar sondern auch entlang der ersten Richtung X, also axial zur Schwenkachse S beweglich in dem Drehlager 110 angeordnet. Um eine verbesserte Spurtreue zu erreichen, kann vorgesehen sein, dass die Lenkgabel 70 mittels einer nicht dargestellten ersten Rückstelleinrichtung in eine vorbestimmte Position um die Schwenkachse S gezogen wird. Hierfür sind in der gezeigten Ausführungsform Gleitlager 150a, 150b, zwischen den Kugellagern 130a, 130b und den Zapfen 114 der Lenkgable 70 eingepresst. Die Gleitlagerbuchsen 150a, 150b ermöglichen diese Bewegung des Rads 90 entlang der Richtung X. Weiterhin wird in Figur 3a gezeigt, dass eine zweite Rückstelleinrichtung, die als elastisches Mittel 170 in Form einer Feder ausgebildet ist, an einer Gleitbuchse 150 angeordnet ist, um das Rad 90 in einem unbelasteten Zustand senkrecht relativ zu dem Drehlager 110 ausgeschoben zu halten. Der Fachmann weiß aber, dass die Verschiebung auch mittels anderer Rückstelleinrichtungen, beispielsweise mittels einer Gummifeder erfolgen kann.

In Figur 3a ist die erste Richtung X mittels eines Pfeils dargestellt. In diesem Zusammenhang kann der Begriff "unbelasteter Zustand" dazu verwendet werden eine Position zu beschreiben, in der senkrecht auf das Rad 90 keine wesentliche Abstützkraft einwirkt. Beispielsweise wird diese Position eingenommen, wenn die Stützrolle 30 wegen einer Neigung des Flurförderzeugs keinen Kontakt mehr mit dem Untergrund hat.

Auch wird in Figur 3a schematisch eine Sensiereinrichtung 190 gezeigt, die beispielsweise als Endlagenschalter die Position der Lenkgabel 70 entlang der ersten Richtung X relativ zu dem Drehlager 110 erkennen kann. In weiteren nicht gezeigten Ausführungsformen kann die Erkennung aber alternativ oder zusätzlich zu der gezeigten Ausführungsform kontaktlos mittels eines Hall-Sensors und/oder eines Radarsensors erfolgen.

In Figur 3b wird eine schematische Schnittansichten der in Figur 3a gezeigten Stützrolle 30 in einem belasteten Zustand gezeigt. Beispielsweise kann dieser belastete Zustand eingenommen werden, wenn die Stützrolle 30 Kontakt mit dem Untergrund hat. Beispielsweise wenn das Gewicht des Flurförderzeugs (nicht gezeigt) eine axiale Kraft auf die Stütztrolle 30 ausübt und die Stützrolle 30 mit einer über dem zweiten Schwellenwert liegende Abstützkraft auf dem Untergrund aufliegt. Zwischen den beiden in Figur 3a und 3b gezeigten Positionen liegt ein Weg der Lenkgabel 70 relativ zu dem Drehlager 110 von ca. 3 mm. Der Fachmann weiß aber, dass auch kürzere oder längere Wege zurückgelegt werden können. Die veränderte Position kann dann über die Sensiereinrichtung 190 erkannt werden. Hierbei ist beachtlich, dass die Bewegung in die Richtung X gegen die durch das elastische Mittel 170, also die zweite Rückstelleinrichtung erzeugte Kraft erfolgt, so dass aus der Position auf die Abstützkraft, die auf die Stützrolle 30 wirkt geschlossen werden kann. Wenn nun die Abstützkraft wieder entfernt wird, kann die Stützrolle 30 wieder den in Figur 1 gezeigten unbelasteten Zustand einnehmen.

Figur 4 zeigt eine schematische Ansicht einer Koppelschwinge 210 mit einer ersten und zweiten Stützrolle 30, 30'. Die Koppelschwinge 210 ist mechanisch zwischen den Stützrollen 30, 30' und einem Lager 212 der Tragstruktur des Fahrzeugs angeordnet. Die Koppelschwinge 210 umfasst eine Wippe 214, an der Hebel 216, 216' angebracht sind. An den Hebeln 216, 216' stützen sich die Lager 212 ab. Die Wippe 214 ist derartig in dem Lager 212 gelagert, dass sie sich samt den Hebeln 216, 216' um eine Drehachse D drehen kann. Diese Drehung erfolgt gegen die Kraft einer dritten Rückstelleinrichtung 218 in Form einer gummielastischen Kompressionsfeder.

Die Koppelschwinge 210 umfasst ferner eine Dämpfungsvorrichtung in Form eines Hydraulikzylinders 250. Ein Kolben 252 des Hydraulikzylinders 250 stützt sich mittels eines Verbindungselements 230 an der Wippe 214 ab. Das Gehäuse des Hydraulikzylinders 250 stützt sich an der Tragstruktur des Fahrzeugs ab.

Die Koppelschwinge 210 ist gemäß der Erfindung, also mittels der dritten Rückstelleinrichtung federgelagert an der Tragstruktur des Fahrzeugs angeordnet. In der gezeigten Ausführungsform sind eine erste und eine zweite Stützrolle 30, 30' an gegenüberliegende Endbereichen der Koppelschwinge 210 angeordnet. In der gezeigten Ausführungsform können die in den Figuren 3a und 3b gezeigten Stützrollen mit Sensiereinrichtung verwendet werden. Der Fachmann weiß aber, dass auch andere Ausführungsformen verwendet werden können, beispielsweise Stützrollen mit Drucksensoren in den Rädern, und/oder Stützrollen die Hall Sensoren, und/oder Radar Sensoren zur Erfassung der Abstützkraft, zumindest indirekt durch Messung einer Bewegung entlang der ersten Richtung umfassen.

Der Hydraulikzylinder 250 erfüllt neben der Funktion der Dämpfungsvorrichtung auch die Funktion des Steuerorgans. Dazu ist in dem Hydraulikzylinder eine Drossel in Form eines steuerlosen Hydraulikventils angeordnet. Das Bewegen des Fluides innerhalb des Hydraulikzylinders 250 von einer Zylinderkammer oberhalb des Kolbens zur Zylinderkammer unterhalb des Kolbens kann über das Hydraulikventil derart gesteuert werden, dass in einem geschlossenen Zustand des Hydraulikventils die Bewegung des Hydraulikzylinders 250 gesperrt wird, um eine vertikale Bewegung, insbesondere eine Federung, der Koppelschwinge 210 und der daran angeordneten ersten und zweiten Stützrolle 30, 30' zu blockieren, und in einer offenen Stellung die Bewegung des Hydraulikzylinders 250 freizugeben, um die vertikale Bewegung, insbesondere Federung, der Koppelschwinge 210 und der daran angeordneten ersten und zweiten Stützrolle 30, 30' zu ermöglichen. Dabei bleibt die Öffnung des Ventils derart, dass weiterhin die Drosselfunktion erreicht wird und so eine Dämpfung sichergestellt ist.

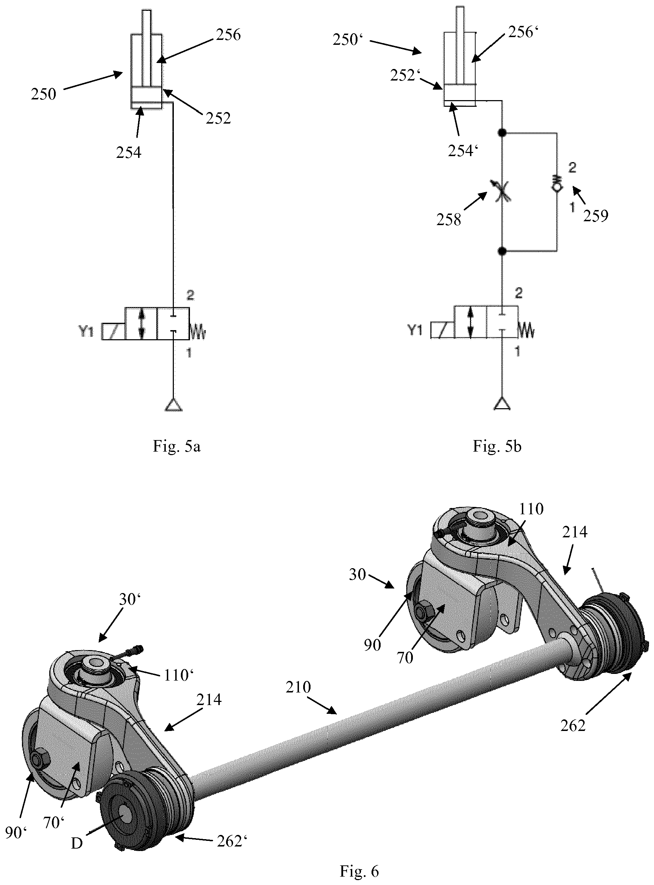

In den Figuren 5a, 5b werden Hydraulikschaltpläne zur Ansteuerung des Hydraulikzylinders 250, 250' gemäß Ausführungsformen der Erfindung gezeigt.

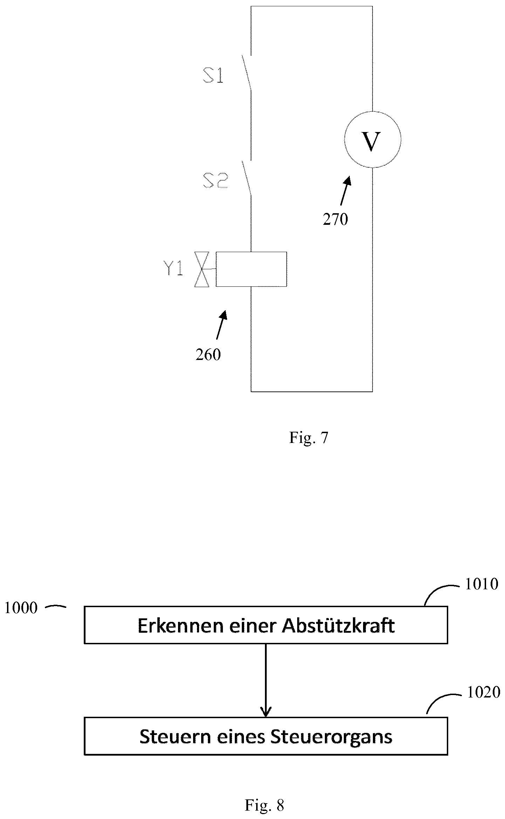

In dem in Figur 5a gezeigten Hydraulikschaltplan wird der Hydraulikzylinder 250, der als einfachwirkender Hydraulikzylinder gezeigt wird, mittels des Hydraulikventils Y1 gesteuert. In der gezeigten Ausführungsform besteht zwischen den Zylinderkammern 254 und 256 keine Verbindung. In der geschlossen Stellung sperrt das Hydraulikventil Y1 die Bewegung des Kolbens 250. Ist Hydraulikventil Y1 hingegen in einer offenen Stellung, wird die Bewegung des Kolbens 252 freigegeben. Das Hydraulikventil Y1 kann wie es in Figur 7 gezeigt ist durch eine Steuervorrichtung 260 elektrisch betätigt werden, d.h. elektrisch geschlossen oder geöffnet werden.

In einer nicht gezeigten Ausführungsform kann zwischen den Zylinderkammern eine Verbindung bestehen, so dass die Bewegung oder das Federn der Koppelschwinge in der offenen Stellung ermöglicht werden kann, damit der Hydraulikzylinder die Funktionen des Steuerorgans erfüllen kann. Durch den Einbau einer Drossel in der Verbindung zwischen den Zylinderkammern kann ferner die Funktion der Dämpfungsvorrichtung realisiert werden.

Die in Figur 5b gezeigte Ausführungsform kann im wesentlichen den Aufbau der in Figur 5a gezeigten Ausführungsform haben. In der gezeigten Ausführungsform wird der Hydraulikzylinder 250', der als einfachwirkender Hydraulikzylinder gezeigt wird, über ein Drosselelement 258 mittels des Hydraulikventils Y1 gesteuert. Das Drosselelement 258 ermöglicht es die Durchflussmenge des Fluids zu steuern und so bei offenem Hydraulikventil Y1 eine, insbesondere gedämpfte Bewegung zu ermöglichen. Vorteilhaft kann in der in Figur 5b gezeigten Ausführungsform durch ein Erhöhen/Absenken des Fluiddrucks in dem Hydraulikzylinder 250' einer Neigung aktiv entgegengewirkt werden. Dies kann durch eine Pumpenmittel unterstützt werden. Auch wird in Figur 5b ein Rückschlageventil 259 parallel zu dem Drosselelement 258 gezeigt. Mittels dieses Rückschlagventils 259 kann eine Einfahrbewegung des Zylinders gedämpft werden, wobei eine entgegengesetzte Ausfahrbewegung nicht gedämpft wird. Somit kann die Ausfahrbewegung schneller erfolgen.

In der gezeigten Ausführungsform kann durch eine Erhöhung des Fluiddrucks, der Zylinder ausgefahren und bei Reduzierung des Drucks eingefahren werden, um somit zusätzlich dem Umkippen entgegenzuwirken. So kann durch die Erhöhung des Drucks erreicht werden, dass eine Bewegung der Koppelschwinge eine höhere Gegenkraft entgegengesetzt wird.

Figur 6 ist eine schematische Ansicht einer Koppelschwinge 210 mit einer ersten und einer zweiten Stützrolle 30, 30' und einem Bremsmittel 262 gemäß einer Ausführungsform der Erfindung.

Die Stützrollen 30, 30' und die Befestigung der Stützrollen 30, 30' der in Figur 6 gezeigten Ausführungsform der Koppelschwinge 210' kann im wesentlichen der in Figur 4 gezeigten Ausführungsform entsprechen. Allerdings umfasst die in Figur 6 gezeigte Koppelschwinge 210 ein, als Steuerorgan und/oder als Dämpfungsvorrichtung wirkendes Bremsmittel 262, das als elektromagnetische Bremse realisiert ist. In der gezeigten Ausführungsform kann das Bremsmittel 262 um die Drehachse D angeordnet sein und weiterhin mittels einer Halteeinrichtung (nicht gezeigt) an der Tragstruktur des Fahrzeugs festgelegt sein.

Insbesondere erfüllt das Bremsmittel 262 neben der Funktion der Dämpfungsvorrichtung auch die Funktion des Steuerorgans. In der gezeigten Realisierung als elektromagnetische Bremse, sperrt die Bremse eine vertikale Bewegung, insbesondere eine Federung, der Koppelschwinge 210 und der daran angeordneten ersten und zweiten Stützrolle 30, 30', wenn die elektromagentische Bremse eingeschaltet ist, bzw. ein Strom durch die Spule der Bremse fließt. Wenn kein Strom durch die Spule fließt, wird die vertikale Bewegung, insbesondere Federung, der Koppelschwinge 210 und der daran angeordneten ersten und zweiten Stützrolle 30, 30' freigegeben. In der gezeigten Ausführungsform sind zwei Bremsmittel 262, 262' an der Drehachse D der Koppelschwinge 210' an gegenüberliegenden Enden angeordnet. Beide Bremsmittel 262, 262' können gleichgeschaltet sein, um gleichzeitig die Bewegung der Koppelschwinge 210 zu ermöglichen und zu sperren. Der Fachmann weiß aber, dass auch eine nur ein Bremsmittel 262 für ein Sperren der Koppelschwinge 210' ausreicht.

In Figur 7 ist gezeigt, dass die Schaltkontakte S1, S2 die mit den Sensiereinrichtungen der Stützrollen wechselwirkend in Reihe geschaltet werden und die Spule des Hydraulikventils Y1 mit einer Spannungsquelle 270 verbinden. Somit wird, wenn beide Schaltkontakte S1, S2 geschlossen sind, d.h. die beiden Stützrollen in einer ersten Position sind, in der sie Kontakt mit dem Untergrund haben, das Hydraulikventil Y1 angesteuert, so dass es in einem ersten Modus geöffnet wird und offen bleibt, um eine Bewegung oder Federn der Koppelschwinge zuzulassen und zu dämpfen. Beispielsweise könnte die erfindungsgemäße Steuervorrichtung derart aufgebaut sein. Der Fachmann weiß aber, dass als Steuervorrichtung auch eine Speicherprogrammierbare Steuerung zum Einsatz kommen könnte.

Kommt es nun zu einer Neigung des Flurförderzeugs uns somit zu einer Entlastung einer der beiden Stützrollen an der Koppelschwinge, wird das Signal unterbrochen und der Hydraulikzylinder sperrt die Koppelschwinge. Somit kann die weitere Einfederung der belasteten Stützrolle verhindert werden. Haben beide Stützrollen wieder Kontakt mit dem Untergrund, wird das Hydraulikventil Y1 aufgrund der erkannten erhöhten Abstützkraft wieder geöffnet, so dass das Antriebsrad wieder ausreichend Last aufweist, die benötigt wird, um ausreichend Traktion beim Anfahren, Lenken und Bremsen zu gewährleisten.

In nicht dargestellten Ausführungsformen können auch mittels der Steuervorrichtung ein Fluiddruck innerhalb des Hydraulikzylinders verändert werden oder andere Steuermittel verwendet werden, wie eine über ein Positionierungsmittel detektierte Ausrichtung einer Stützrolle um die Schwenkachse.

Die in Figur 7 gezeigte Schaltung kann beispielsweise zur Ansteuerung der in den Figuren 5a und 5b gezeigten Hydraulikzylinder verwendet werden. Allerdings kann auch das in Figur 6 gezeigte und oben beschriebene Bremsmittel mittels einer solchen Schaltung angesteuert werden, wenn die Spule des Bremsmittels anstelle der Spule des Hydraulikventils in der Schaltung angeschlossen wird.

Figur 8 zeigt ein Verfahren 1000 zum Stabilisieren eines Flurförderzeugs gemäß einer Ausführungsform der Erfindung. Das Verfahren umfasst die Schritte:
Erkennen 1010 einer Abstützkraft, mit der sich die Stützrolle auf einem Untergrund abstützt, wobei bei zumindest einer ersten Abstützkraft die Stützrolle in Kontakt mit dem Untergrund steht, und bei zumindest einer zweiten Abstützkraft die Stützrolle in keinem Kontakt mit dem Untergrund steht; und
Steuern 1020 eines Steuerorgans in Abhängigkeit der erkannten Abstützkraft, wobei mittels des Steuerorgans bei Erkennen der zweiten Abstützkraft eine Drehung der Koppelschwinge 210 und/oder der Stützrolle um eine Drehachse zumindest teilweise unterbunden wird.

### Bezugszeichenliste

- 1: Flurförderzeug
- 3, 3', 30, 30': Stützrolle
- 4: Tragstruktur
- 5: Antriebsrad
- 6: Untergrund
- 7, 70, 70': Lenkgabel
- 9, 90, 90': Rad
- 11, 110, 110': Drehlager
- 13a, 13b, 130a, 130b: Kugellager
- 14, 114: Zapfen
- 150a, 150b: Gleitlager
- 170: elastisches Mittel
- 190: Sensiereinrichtung
- 210: Koppelschwinge
- 212: Lager
- 214: Wippe
- 216, 216': Hebel
- 218: Rückstelleinrichtung
- 230: Verbindungselement
- 250, 250': Hydraulikzylinder
- 252, 252': Kolben
- 254, 256, 254', 256': Zylinderkammer
- 258: Drosselelement
- 259: Rückschlagventil
- 260: Steuervorrichtung
- 262: Bremsmittel
- 270: Spannungsquelle

- 1000: Verfahren zum Stabilisieren eines Flurförderzeugs
- 1010: Erkennen einer Position
- 1020: Steuern eines Stellzylinders

- S1, S2: Schaltkontakt
- Y1: Hydraulikventil
- S: Schwenkachse
- R: Rollachse
- X: Richtung
- N: Normalenrichtung
- D: Drehachse

## Patentansprüche

1. Stützrolle (30, 30') zur Abstützung eines Fahrzeugs auf einem Untergrund, umfassend zumindest ein zumindest indirekt mit zumindest einer Tragstruktur des Fahrzeugs verbindbares Lagerelement, zumindest eine mit dem Lagerelement verbundene Gabel und zumindest ein in der Gabel um eine erste Rollachse (R) drehbar gelagertes und in Kontakt mit dem Untergrund bringbares Rad (90, 90'), wobei die Stützrolle ferner zumindest eine Sensiereinrichtung (190) zur Erfassung zumindest einer Abstützkraft, mit der das Rad (90, 90') sich auf dem Untergrund abstützt, umfasst, wobei mittels der Sensiereinrichtung (190) eine zwischen zumindest einem ersten Element und zumindest einem zweiten Element wirkende Kraft erfassbar ist; **dadurch gekennzeichnet, dass** die Sensiereinrichtung (190) zumindest bereichsweise in dem Lagerelement angeordnet ist.

2. Stützrolle (30, 30') nach Anspruch 1, **dadurch gekennzeichnet, dass**
(i) die Rollachse (R) senkrecht zu einer Normalenrichtung (N) des Untergrunds verläuft und/oder die Tragstruktur zumindest bereichsweise durch ein Karosserieteil des Fahrzeugs gebildet ist;
(ii) das Lagerelement in Form zumindest eines Drehlagers (110, 110') ausgebildet ist und mittels des Drehlagers (110, 110') eine Drehung der Gabel um eine im Wesentlichen senkrecht zu der Rollachse (R) verlaufende Schwenkachse (S) möglich ist, wobei insbesondere sich die Rollachse (R) und die Schwenkachse (S) schneiden oder windschief zueinander verlaufen und/oder die Gabel und/oder die Rollachse (R) mittels zumindest einer ersten Rückstelleinrichtung in zumindest eine vorbestimmte Lage relativ zu dem Lagerelement und/oder der Tragstruktur, vorzugsweise bezüglich der Schwenkachse (S), zwingbar ist, und/oder
(iii) mittels der Sensiereinrichtung (190) eine Bewegung zumindest eines ersten Elements relativ zu zumindest einem zweiten Element erfassbar ist, vorzugsweise eine, insbesondere lineare, Bewegung in eine erste Richtung, die senkrecht zu der Rollachse (R) und/oder parallel zu der Schwenkachse (S) verläuft, und/oder mittels der Sensiereinrichtung (190) eine Zugkraft, eine Druckkraft und/oder Scherkraft erfassbar ist.

3. Stützrolle (30, 30') nach Anspruch 1 oder 2, **dadurch gekennzeichnet, dass**
(a) das erste Element ausgewählt ist aus der Gruppe umfassend die Rolle, eine in der Gabel gelagerte Lagerachse der Rolle, die Gabel, zumindest ein Verbindungsmittel der Gabel mit dem Lagerelement, wie einem Zapfen (114), und das Lagerelement, und/oder das zweite Element ausgewählt ist aus der Gruppe umfassend die Lagerachse, die Gabel, das Verbindungsmittel, das Lagerelement und die Tragstruktur,
(b) das zweite Element, insbesondere das Lagerelement angepasst ist, das erste Element, insbesondere die Gabel, entlang der ersten Richtung (X) beweglich zu halten, vorzugsweise ist das zweite Element (110, 110') angepasst, eine Bewegung des ersten Elements von bis zu 5 mm, insbesondere von 3 mm, vorzugsweise relativ zu dem zweiten Element, zu ermöglichen, und/oder
(c) das erste Element, insbesondere die Gabel und/oder das Verbindungsmittel, mittels zumindest einer zweiten Rückstelleinrichtung in eine erste Position, insbesondere in eine Richtung (X) auf das zweite Element zu, zwingbar ist.

4. Stützrolle (30, 30') nach Anspruch 2 oder 3, **dadurch gekennzeichnet, dass**
die erste Rückstelleinrichtung und/oder die zweite Rückstelleinrichtung zumindest ein elastisches Mittel (170), zumindest eine Druckfeder, zumindest eine Schraubenfeder, zumindest eine pneumatische Feder, zumindest eine hydraulische Feder und/oder zumindest eine Gasdruckfeder umfasst bzw. umfassen, und/oder
die Sensiereinrichtung (190) zumindest bereichsweise auf der der Gabel und/oder dem Rad (90, 90') abgewandten Seite des Lagerelements, vorzugsweise des Drehlagers (110, 110'), angeordnet ist.

5. Stützrolle (30, 30') nach einem der vorangehenden Ansprüche, **gekennzeichnet durch** zumindest eine Positionserkennungseinrichtung, mittels der eine Ausrichtung der Gabel, der Lagerachse und/oder des Rads (90, 90') um die Schwenkachse (S) und/oder relativ zu dem Untergrund bestimmbar ist.

6. Stützrolle (30, 30') nach einem der vorangehenden Ansprüche, **dadurch gekennzeichnet, dass**
die Sensiereinrichtung (190) und/oder die Positionserkennungseinrichtung zumindest ein Sensormittel, insbesondere umfassend zumindest einen Endlagenschalter, zumindest einen Dehnungsmesssenor, zumindest einen Drucksensor, zumindest einen Hall-Sensor, zumindest einen Radar-Sensor, zumindest einen Ultraschallsensor, zumindest einen Abstandsensor, zumindest einen Echolot-Sensor, zumindest einen akustischen Sensor, zumindest einen optischen Sensor, zumindest einen elektromagnetischen Sensor und/oder zumindest einen magnetischen Sensor umfasst bzw. umfassen und/oder mittels der Sensiereinrichtung (190) die erste Position und/oder zumindest eine zweite Position des ersten Elements relativ zu dem zweiten Element erfassbar ist.

7. Fahrzeug, insbesondere Flurförderfahrzeug, umfassend zumindest eine Stützrolle (30, 30') nach einem der vorangehenden Ansprüche.

8. Fahrzeug nach Anspruch 7, **dadurch gekennzeichnet, dass**
das Fahrzeug ferner zumindest eine Koppelschwinge (210) umfasst, wobei die Koppelschwinge (210) mechanisch zwischen der Tragstruktur und der Stützrolle (30, 30') angeordnet ist und die Koppelschwinge (210) zumindest eine um zumindest eine Drehachse (D) drehbar gelagerte Wippe (214) sowie ein mit der Wippe (214) in Wirkverbindung stehender Hebel (216, 216') aufweist, wobei sich die Stützrolle (30, 30'), insbesondere das Lagerelement, an der der Schwenkachse (S) und/oder der Wippe (214) abgewandten Ende des Hebels (216, 216') abstützt, wobei ferner vorzugsweise der Hebel (216, 216') von der Wippe (214) umfasst ist und/oder zumindest bereichsweise einstückig mit der Wippe (214) ausgebildet ist, wobei insbesondere die Koppelschwinge (210) zumindest eine dritte Rückstelleinrichtung umfasst, mittels der die Wippe (214) und/oder der Hebel (216, 216') in zumindest eine dritte Position zwingbar ist, wobei die dritte Rückstelleinrichtung vorzugsweise zumindest eine Torsionsfeder, zumindest eine Schraubenfeder, zumindest eine Zugfeder, zumindest eine Schubfeder, zumindest eine Scherfeder, zumindest ein gummielastisches Element, zumindest eine Schneckenfeder und/oder zumindest eine Gasdruckfeder umfasst.

9. Fahrzeug nach Anspruch 8, **dadurch gekennzeichnet, dass**
(i) die Koppelschwinge (210) zumindest eine Dämpfungsvorrichtung umfasst, wobei mittels der Dämpfungsvorrichtung eine Bewegung, insbesondere des Hebels (216, 216'), der Stützrolle (30, 30') und/oder der Wippe (214), um die Drehachse (D) dämpfbar ist und/oder
(ii) das Fahrzeug **gekennzeichnet ist durch** zumindest ein, insbesondere mit der Dämpfungsvorrichtung in Wirkverbindung stehendes, Steuerorgan, wobei mittels des Steuerorgans eine Bewegung, insbesondere des Hebels (216, 216'), der Stützrolle (30, 30') und/oder der Wippe (214), um die Drehachse (D) reduzierbar, vorzugsweise unterbindbar ist, wobei vorzugsweise das Steuerorgan zumindest bereichsweise von der Dämpfungsvorrichtung umfasst ist.

10. Fahrzeug nach Anspruch 9, **dadurch gekennzeichnet, dass**
die Dämpfungsvorrichtung und/oder das Steuerorgan zumindest einen Zylinder, insbesondere einen Hydraulikzylinder (250), mit zumindest einem innerhalb des Zylinders bewegbaren Kolben (252) umfasst, wobei der Zylinder mit dem Hebel (216, 216'), der Stützrolle (30, 30'), insbesondere dem Lagerelement, und/oder der Wippe (214), vorzugsweise über ein sich zumindest in eine radiale Richtung bezüglich der Drehachse (D) erstreckendes Verbindungselement (230), und der Kolben (252) mit der Tragstruktur oder der Kolben (252) mit dem Hebel (216, 216'), der Wippe (214), der Stützrolle (30, 30'), dem Lagerelement und/oder dem Verbindungselement (230) und der Zylinder mit der Tragstruktur in Wirkverbindung steht.

11. Fahrzeug nach Anspruch 10, **dadurch gekennzeichnet, dass**
das Steuerorgan zumindest ein Steuerelement umfasst, wobei das Steuerelement vorzugsweise zumindest ein Steuerventil umfasst und/oder mittels eines Schließen des Steuerelements eine Bewegung der Dämpfungsvorrichtung und/oder des Steuerorgans und/oder eine Bewegung, insbesondere der Wippe (214), des Hebels (216, 216') und/oder der Stützrolle (30, 30'), um die Drehachse (D) unterbunden ist und bei einem Öffnen des Steuerelements eine Bewegung der Dämpfungsvorrichtung und/oder des Steuerorgans und/oder eine Bewegung, insbesondere der Wippe (214), des Hebels (216, 216') und/oder der Stützrolle (30, 30'), um die Drehachse (D) freigegeben ist.

12. Fahrzeug nach Anspruch 11, **dadurch gekennzeichnet, dass**
(i) der Zylinder vorzugsweise einen einfach wirkenden Zylinder umfasst und das Steuerelement ein Drosselelement (258) umfasst, das angepasst ist die Durchflussmenge zumindest eines Fluids, vorzugsweise eine Hydraulikflüssigkeit, ein Gas und/oder Luft in den Zylinder zu steuern, vorzugsweise um eine Dämpfung zu ermöglichen, wobei vorzugsweise das Steuerelement angepasst ist, in Abhängigkeit von der mittels der Sensiereinrichtung erfassten Abstützkraft das Drosselelement (258) zu steuern, um den Fluiddruck zu erhöhen, um eine Reduzierung der Abstützkraft unter einen vorbestimmten Wert zu vermeiden, oder
(ii) der Zylinder, insbesondere der Hydraulikzylinder (250), zumindest zwei über zumindest eine Drossel miteinander verbindbare Zylinderkammern (254, 256) umfasst, wobei insbesondere zwischen den Zylinderkammern (254, 256), insbesondere durch Bewegung des Kolbens (252) das Fluid bewegbar ist.

13. Fahrzeug nach Anspruch 9, **dadurch gekennzeichnet, dass**
das Steuerorgan zumindest ein Bremsmittel (262), insbesondere eine elektromagnetische Bremse, eine mechanische Bremse, eine haft- und/oder formschlüssig arbeitende Bremse umfasst, wobei das Bremsmittel, vorzugsweise einerseits mit der Wippe (214) und/oder der Stützrolle (30, 30') und/oder andererseits mit der Tragstruktur in Wirkverbindung steht, wobei vorzugsweise
(a) das Bremsmittel (262), zumindest bereichsweise, vorzugsweise zirkular umlaufend um die Drehachse (D) der Koppelschwinge (210) angeordnet ist, und/oder
(b) das Fahrzeug **gekennzeichnet ist durch** zumindest eine mit dem Steuerorgan und/oder der Dämpfungsvorrichtung in Wirkverbindung stehende Steuereinrichtung, wobei die Steuereinrichtung zumindest eine Energieversorgung, insbesondere elektrische Spannungsversorgung und/oder eine Vorrichtung zur Speicherung und/oder Abgabe mechanischer Energie, des Bremsmittels (262) umfasst, und wobei bei Abgabe von Energie von der Steuereinrichtung an das Steuerorgan eine Bewegung der Dämpfungsvorrichtung und/oder des Steuerorgans und/oder eine Bewegung, insbesondere der Wippe (214) und/oder der Stützrolle (30, 30'), um die Drehachse (D) unterbunden ist und bei einem Unterbrechen der Energieabgabe eine Bewegung der Dämpfungsvorrichtung und/oder des Steuerorgans und/oder eine Bewegung, insbesondere der Wippe (214) und/oder der Stützrolle (30, 30'), um die Drehachse (D) freigegeben ist.

14. Fahrzeug nach einem der Ansprüche 7 bis 13, **gekennzeichnet durch** zumindest eine mit der Sensiereinrichtung (190), der Positionserkennungseinrichtung, der Steuereinrichtung und/oder dem Steuerorgan, vorzugsweise dem Steuerelement, in Wirkverbindung stehende Steuervorrichtung, wobei vorzugsweise mittels der Steuervorrichtung das Steuerorgan derartig beeinflussbar ist, dass die Bewegung um die Drehachse (D) reduziert, vorzugsweise unterbunden ist, wenn mittels der Sensiereinrichtung (190) eine Abstützkraft sensiert wird, die einem fehlenden Kontakt zwischen der Stützrolle (30, 30') und dem Untergrund entspricht und/oder die Bewegung um die Drehachse (D) zumindest teilweise freigegeben wird, wenn mittels der Sensiereinrichtung (190) eine Abstützkraft sensiert wird, die einem bestehenden Kontakt zwischen der Stützrolle (30, 30') und dem Untergrund entspricht, wobei insbesondere die Steuervorrichtung das Steuerorgan in Abhängigkeit von einer Position zumindest einer Hubgabel des Fahrzeugs, insbesondere relativ zu dem Untergrund, einer Geschwindigkeit des Fahrzeugs und/oder eines Lenkwinkels des Fahrzeugs beeinflusst.

15. Fahrzeug nach einem der Ansprüche 7 bis 14, **dadurch gekennzeichnet, dass**
(i) das Steuerorgan zumindest ein Pumpenmittel zum Erhöhen eines Fluiddrucks in dem Zylinder, insbesondere den Zylinderkammern (254, 256), umfasst, wobei vorzugsweise die Steuervorrichtung angepasst ist, in Abhängigkeit von der mittels der Sensiereinrichtung (190) erfassten Abstützkraft das Pumpenmittel zu steuern, um den Fluiddruck zu erhöhen, um eine Reduzierung der Abstützkraft unter einen vorbestimmten Wert zu vermeiden,
(ii) das Fahrzeug **gekennzeichnet ist durch** eine Vielzahl von Stützrollen (30, 30') nach einem der Ansprüche 1 bis 6, wobei die Koppelschwinge (210) vorzugsweise eine Vielzahl von, vorzugsweise an der Wippe (214) angeordneten, von der Wippe (214) umfassten und/oder zumindest bereichsweise einstückig mit der Wippe (214) ausgebildeten Hebeln (216, 216') umfasst, und/oder
(iii) das Fahrzeug als Flurförderzeug und/oder als Gabelhubwagen mit zumindest einem Antriebsrad, insbesondere einen Gabelhubwagen mit Fünfradfahrwerk, ausgebildet ist.

16. Verfahren (1000) zum Stabilisieren eines Fahrzeugs, insbesondere eines Fahrzeugs nach einem der Ansprüche 7 bis 15, mit einer Koppelschwinge (210) und zumindest einer Stützrolle (30, 30'), insbesondere einer Stützrolle (30, 30') nach einem der Ansprüche 1 bis 6, mit den Schritten:
Erkennen (1010) einer Abstützkraft, mit der sich die Stützrolle (30, 30') auf einem Untergrund abstützt, wobei bei zumindest einer ersten Abstützkraft die Stützrolle (30, 30') in Kontakt mit dem Untergrund steht, und bei zumindest einer zweiten Abstützkraft die Stützrolle (30, 30') in keinem Kontakt mit dem Untergrund steht; und Steuern (1020) eines Steuerorgans (250) in Abhängigkeit der erkannten Abstützkraft, wobei mittels des Steuerorgans bei Erkennen der zweiten Abstützkraft eine Drehung der Koppelschwinge (210) und/oder der Stützrolle (30, 30') um eine Drehachse (D) zumindest teilweise unterbunden wird.

17. Verfahren (1000) nach Anspruch 16, **dadurch gekennzeichnet, dass**
(a) bei Erkennen der ersten Abstützkraft eine Bewegung um die Drehachse (D) mittels zumindest einer Dämpfungsvorrichtung gedämpft wird,
(b) das Dämpfen und das Unterbinden der Bewegung um die Drehachse (D) mittels einer Vorrichtung, die zumindest bereichsweise das Steuerorgan und die Dämpfungsvorrichtung umfasst, durchgeführt wird, insbesondere die Dämpfungsvorrichtung und das Steuerorgan zumindest bereichsweise einstückig ausgebildet werden, und/oder
(c) die Unterbindung der Bewegung um die Drehachse (D) durch Unterbinden einer Bewegung der Dämpfungsvorrichtung und/oder zumindest einer dritten Rückstelleinrichtung erreicht wird.

## Claims

1. Support roller (30, 30') for supporting a vehicle on a ground, comprising at least one bearing element which can be connected at least indirectly to at least one supporting structure of the vehicle, at least one fork which is connected to the bearing element and at least one wheel (90) which is mounted in the fork so as to be rotatable about a first rolling axis (R) and can be brought into contact with the ground, (90, 90'), the support roller further comprising at least one sensing device (190) for detecting at least one support force with which the wheel (90, 90') is supported on the ground, wherein a force acting between at least one first element and at least one second element can be detected by means of the sensing device (190); **characterized in that**
the sensing device (190) is arranged at least in areas in the bearing element.

2. Support roller (30, 30') according to claim 1, **characterized in that**
(i) the rolling axis (R) is perpendicular to a normal direction (N) of the ground and/or the supporting structure is formed at least areas by a body part of the vehicle;
(ii) the bearing element is in the form of at least one pivot bearing (110, 110') and by means of the pivot bearing (110, 110') a rotation of the fork about a pivot axis (S) extending substantially perpendicularly to the rolling axis (R) is possible, wherein in particular the rolling axis (R) and the pivot axis (S) intersect or run warped relative to one another and/or the fork and/or the rolling axis (R) can be forced into at least one predetermined position relative to the bearing element and/or the supporting structure, preferably relative to the pivot axis (S), by means of at least one first readjusting device, and/or
(iii) a movement of at least one first element relative to at least one second element can be detected by means of the sensing device (190), preferably a, in particular linear, movement in a first direction which runs perpendicular to the rolling axis (R) and/or parallel to the pivot axis (S), and/or a tensile force, a compressive force and/or shear force can be detected by means of the sensing device (190).

3. Support roller (30, 30') according to claim 1 or 2, **characterized in that**
(a) the first element is selected from the group comprising the roller, a bearing shaft of the roller mounted in the fork, the fork, at least one connecting means of the fork to the bearing element, such as a journal (114), and the bearing element, and/or the second element is selected from the group comprising the bearing shaft, the fork, the connecting means, the bearing element and the support structure,
(b) the second element, in particular the bearing element, is adapted to hold the first element, in particular the fork, movably along the first direction (X), preferably the second element (110, 110') is adapted to enable movement of the first element of up to 5 mm, in particular of 3 mm, preferably relative to the second element, and/or
(c) the first element, in particular the fork and/or the connecting means, can be forced into a first position, in particular in a direction (X) towards the second element, by means of at least one second readjusting device.

4. Support roller (30, 30') according to claim 2 or 3, **characterized in that**
the first readjusting device and/or the second readjusting device comprises or comprise at least one elastic means (170), at least one compression spring, at least one helical spring, at least one pneumatic spring, at least one hydraulic spring and/or at least one gas compression spring, and/or
the sensing device (190) is arranged at least in areas on the side of the bearing element facing away from the fork and/or the wheel (90, 90'), preferably the pivot bearing (110, 110').

5. Support roller (30, 30') according to one of the preceding claims, **characterized by** at least one position recognition device by means of which an alignment of the fork, the bearing shaft and/or the wheel (90, 90') about the pivot axis (S) and/or relative to the ground can be determined.

6. Support roller (30, 30') according to one of the preceding claims, **characterized in that** the sensing device (190) and/or the position detection device comprises at least one sensor means, in particular comprising at least one limit position switch, at least one elongation measurement sensor, at least one pressure sensor, at least one Hall sensor, at least one radar sensor, at least one ultrasonic sensor, at least one distance sensor, at least one echo-sounder sensor, at least one acoustic sensor, at least one optical sensor, at least one electromagnetic sensor and/or at least one magnetic sensor, and/or the first position and/or at least a second position of the first element relative to the second element is detectable by means of the sensing device (190).

7. Vehicle, in particular an industrial truck, comprising at least one support roller (30, 30') according to one of the preceding claims.

8. Vehicle according to claim 7, **characterized in that**
the vehicle further comprises at least one coupling link (210), wherein the coupling link (210) is arranged mechanically between the supporting structure and the support roller (30, 30') and the coupling link(210) comprises at least one rocker (214) mounted for rotation about at least one axis of rotation (D) and a lever (216) operatively connected to the rocker (214), 216'), the support roller (30, 30'), in particular the bearing element, being supported at the end of the lever (216, 216') adverted to the pivot axis (S) and/or the rocker (214), the lever (216, 216') also preferably is comprised by the rocker (214) and/or is formed integrally with the rocker (214) at least in areas, in particular the coupling link (210) comprising at least one third readjusting device by means of which the rocker (214) and/or the lever (216, 216') can be forced into at least one third position, wherein the third readjusting device preferably comprises at least one torsion spring, at least one helical spring, at least one tension spring, at least one thrust spring, at least one shear spring, at least one rubber-elastic element, at least one volute spring and/or at least one gas pressure spring.

9. Vehicle according to claim 8, **characterized in that**
(i) the coupling link (210) comprises at least one damping device, it being possible for a movement, in particular of the lever (216, 216'), the support roller (30, 30') and/or the rocker (214), about the axis of rotation (D) to be damped by means of the damping device, and/or
(ii) the vehicle is **characterized by** at least one control member which is operatively connected, in particular to the damping device, wherein a movement, in particular of the lever (216, 216'), the support roller (30, 30') and/or the rocker (214), about the axis of rotation (D) can be reduced, preferably prevented, by means of the control member, wherein the control member is preferably comprised at least in areas by the damping device.

10. Vehicle according to claim 9, **characterized in that**
the damping device and/or the control member comprises at least one cylinder, in particular a hydraulic cylinder (250), with at least one piston (252) movable within the cylinder, the cylinder having the lever (216, 216'), the support roller (30, 30'), in particular the bearing element, and/or the rocker (214), preferably via a connecting element (230) extending at least in a radial direction with respect to the axis of rotation (D), and the piston (252) is operatively connected to the supporting structure or the piston (252) is operatively connected to the lever (216, 216'), the rocker (214), the support roller (30, 30'), the bearing element and/or the connecting element (230) and the cylinder is operatively connected to the supporting structure.

11. Vehicle according to claim 10, **characterized in that**
the control member comprises at least one control element, the control element preferably comprising at least one control valve and/or, by means of closing the control element, a movement of the damping device and/or of the control member and/or a movement, in particular of the rocker (214), of the lever (216), 216') and/or the support roller (30, 30'), is prevented about the axis of rotation (D) and, when the control element is opened, a movement of the damping device and/or of the control member and/or a movement, in particular of the rocker (214), of the lever (216, 216') and/or of the support roller (30, 30'), about the axis of rotation (D) is released.

12. Vehicle according to claim 11, **characterized in that**
(i) the cylinder preferably comprises a single-acting cylinder and the control element comprises a throttle element (258) adapted to control the flow rate of at least one fluid, preferably a hydraulic fluid, a gas and/or air into the cylinder, preferably to allow damping, preferably the control element being adapted to control the throttle element (258) in dependence on the support force sensed by the sensing means to increase the fluid pressure to avoid a reduction of the support force below a predetermined value, or
(ii) the cylinder, in particular the hydraulic cylinder (250), comprises at least two cylinder chambers (254, 256) which are connectable to one another via at least one throttle, the fluid being movable in particular between the cylinder chambers (254, 256), in particular by movement of the piston (252).

13. vehicle according to claim 9, **characterized in that**
the control member comprises at least one braking means (262), in particular an electromagnetic brake, a mechanical brake, a brake operating in an adhesive and/or positive engagement manner, the braking means being operatively connected, preferably on the one hand, to the rocker (214) and/or the support roller (30, 30') and/or, on the other hand, to the supporting structure, preferably (a) the braking means (262) is arranged at least in regions, preferably circumferential about the axis of rotation (D) of the coupling link (210), and/or
(b) the vehicle is **characterized by** at least one control device which is operatively connected to the control member and/or the damping device, the control device comprising at least one power supply, in particular an electrical power supply and/or a device for storing and/or emitting mechanical energy, of the braking means (262), and wherein when energy is supplied from the control device to the control member a movement of the damping device and/or of the control member and/or a movement, in particular of the rocker (214) and/or of the support roller (30, 30'), about the axis of rotation (D) is prevented, and when the energy supply is interrupted a movement of the damping device and/or of the control member and/or a movement, in particular of the rocker (214) and/or of the support roller (30, 30'), about the axis of rotation (D) is released.

14. Vehicle according to one of the claims 7 to 13, **characterized by** at least one control device operatively connected to the sensing device (190), the position recognition device, the control device and/or the control member, preferably the control element, wherein the control member can preferably be influenced by means of the control device in such a way that the movement about the axis of rotation (D) is reduced, preferably prevented, if a support force is sensed by means of the sensing device (190), which support force is attributable to a missing contact between the supporting roller (30), the supporting roller (30) and the control member (30), 30') and the ground and/or the movement about the axis of rotation (D) is at least partially released when, by means of the sensing device (190), a support force is sensed which corresponds to an existing contact between the supporting roller (30, 30') and the ground, in particular the control device influencing the control member as a function of a position of at least one lifting fork of the vehicle, in particular relative to the ground, a speed of the vehicle and/or a steering angle of the vehicle.

15. Vehicle according to any of claims 7 to 14, **characterized in that**
(i) the control member comprises at least one pump means for increasing a fluid pressure in the cylinder, in particular the cylinder chambers (254, 256), preferably the control device being adapted to control the pump means in dependence on the support force detected by the sensing means (190) in order to increase the fluid pressure in order to avoid a reduction of the support force below a predetermined value,
(ii) the vehicle is **characterized by** a plurality of support rollers (30, 30') according to one of claims 1 to 6, wherein the coupling link (210) preferably comprises a plurality of levers (216, 216') arranged preferably on the rocker (214), comprised by the rocker (214) and/or formed at least in regions integrally with the rocker (214), and/or
(iii) the vehicle is designed as an industrial truck and/or as a pallet truck with at least one drive wheel, in particular a pallet truck with five-wheel running gear.

16. Method (1000) for stabilizing a vehicle, in particular a vehicle according to one of claims 7 to 15, comprising a coupling link (210) and at least one support roller (30, 30'), in particular a support roller (30, 30') according to one of claims 1 to 6, comprising the steps:
detecting (1010) a support force with which the support roller (30, 30') is supported on a substrate, wherein at least at one first support force the support roller (30, 30') is in contact with the substrate and at least at one second support force the support roller (30, 30') is in no contact with the substrate; and
control (1020) of a control member (250) in dependency of the detected support force, wherein a rotation of the coupling link (210) and/or of the support roller (30, 30') about an axis of rotation (D) is at least partially prevented by means of the control member when the second support force is detected.

17. Method (1000) according to claim 16, **characterized in that**
(a) upon detection of the first support force, a movement about the axis of rotation (D) is damped by means of at least one damping device,
(b) the damping and the prevention of the movement about the axis of rotation (D) is carried out by means of a device which at least in areas comprises the control member and the damping device, in particular the damping device and the control member are formed integrally at least in areas, and/or
(c) the prevention of the movement about the axis of rotation (D) is achieved by preventing a movement of the damping device and/or at least one third readjusting device.

## Revendications

1. Rouleau de support (30, 30') pour supporter un véhicule sur un sol, comprenant au moins un élément de palier qui peut être relié au moins indirectement à au moins une structure portante du véhicule, au moins une fourche qui est reliée à l'élément de palier et au moins une roue (90, 90') qui est montée dans la fourche pour pouvoir tourner autour d'un premier axe de roulement (R) et être amenée au contact du sol, le rouleau de support comprenant en outre au moins un dispositif capteur (190) pour détecter au moins une force d'appui par laquelle la roue (90, 90') est soutenue sur le sol,
une force agissant entre au moins un premier élément et au moins un deuxième élément pouvant être détectée au moyen du dispositif capteur (190), **caractérisée en ce que** le dispositif capteur (190) est disposé au moins dans des zones de l'élément de palier.

2. Rouleau de support (30, 30') selon la revendication 1, **caractérisé en ce que**
(i) l'axe de roulement (R) est perpendiculaire à une direction normale (N) du sol et/ou la structure portante est formée au moins en partie par une partie de la caisse du véhicule ;
(ii) l'élément de palier se présente sous la forme d'au moins un palier pivotant (110, 110') et au moyen du palier pivotant (110, 110') une rotation de la fourche autour d'un axe de pivotement (S) s'étendant sensiblement perpendiculairement à l'axe de roulement (R) est possible, dans laquelle en particulier l'axe de roulement (R) et l'axe de pivotement (S) se croisent ou de travers s'étendent l'un par rapport à l'autre et/ou la fourche et/ou l'axe de roulement (R) peuvent être forcés dans au moins une position prédéterminée par rapport à l'élément de palier et/ou la structure porteuse, de préférence par rapport à l'axe de pivotement (S), au moyen d'au moins un premier dispositif de rappel, et/ou
(iii) un mouvement d'au moins un premier élément par rapport à au moins un deuxième élément peut être détecté au moyen du dispositif capteur (190), de préférence un mouvement, en particulier linéaire, dans une première direction perpendiculaire à l'axe de roulement (R) et/ou parallèle à l'axe de pivotement (S), et/ou une force de traction, une force de compression et/ou effort tranchant peut être détecté au moyen du dispositif capteur (190).

3. Rouleau de support (30, 30') selon la revendication 1 ou 2, **caractérisé en ce que**
(a) le premier élément est choisi dans le groupe comprenant le rouleau, un axe palier du rouleau monté dans la fourche, la fourche, au moins un moyen de liaison de la fourche à l'élément de roulement, tel qu'une tourillon (114), et l'élément de roulement, et/ou le second élément est choisi dans le groupe comprenant l'axe de roulement, la fourche, le moyen de liaison, l'élément de roulement et la structure support,
b) le deuxième élément, en particulier l'élément de palier, est adapté pour maintenir le premier élément, en particulier la fourche, mobile dans la première direction (X), de préférence le deuxième élément (110, 110') est adapté pour permettre un mouvement du premier élément pouvant atteindre jusqu' à 5 mm, en particulier de 3 mm, de préférence par rapport au deuxième élément, et/ou
c) le premier élément, en particulier la fourche et/ou les moyens de liaison, peut être poussé dans une première position, en particulier dans une direction (X) vers le second élément, au moyen d'au moins un second dispositif de rappel.

4. Rouleau de support (30, 30') selon la revendication 2 ou 3, **caractérisé en ce que**
le premier dispositif de rappel et/ou le second dispositif de rappel comprend ou comprennent au moins un moyen élastique (170), au moins un ressort de pression, au moins un ressort à boudin, au moins un ressort pneumatique, au moins un ressort hydraulique et/ou au moins un ressort à gaz, et/ou
le dispositif capteur (190) est disposé au moins dans des zones du côté de l'élément de palier opposé à la fourche et/ou à la roue (90, 90'), de préférence le palier pivotant (110, 110').

5. Rouleau de support (30, 30') selon l'une des revendications précédentes, **caractérisé par** au moins un dispositif capteur de position permettant de déterminer l'alignement de la fourche, de l'axe palier et/ou de la roue (90, 90') autour de l'axe de pivotement (S) et/ou par rapport au sol.

6. Rouleau de support (30, 30') selon l'une des revendications précédentes, **caractérisé en ce que** le dispositif capteur (190) et/ou le dispositif capteur de position comprend ou comprennent au moins un moyen de détection, en particulier comprenant au moins un commutateur de fin de course, au moins un capteur de mesure de contrainte, au moins un capteur de pression, au moins un capteur à effet Hall, au moins un capteur radar, au moins un capteur ultrasonique, au moins un capteur de distance, au moins un capteur sondeur, au moins un capteur acoustique, au moins un capteur optique, au moins un capteur électromagnétique et/ou au moins un capteur magnétique, et/ou la première position et/ou au moins une deuxième position du premier élément par rapport au deuxième élément peuvent être détectés au moyen du capteur (190).

7. Véhicule, en particulier chariot élévateur, comprenant au moins un rouleau de support (30, 30') selon l'une des revendications précédentes.

8. Véhicule selon la revendication 7, **caractérisé en ce que**
le véhicule comprend en outre au moins un couplage bras oscillant (210), dans lequel le couplage bras oscillant (210) est disposée mécaniquement entre la structure portante et le rouleau de support (30, 30') et le couplage bras oscillant (210) comprend au moins une bascule (214) montée pour tourner autour d'au moins un axe de rotation (D) et un levier (216, 216') relié en fonction au bascule (214), le rouleau de support (30, 30'), en particulier l'élément d'appui, étant supporté à l'extrémité du levier (216, 216') éloignée de l'axe de pivotement (S) et/ou de la bascule (214), dans laquelle en outre de préférence le levier (216, 216') est comprend par la bascule (214) et/ou est formé au moins dans des zones monobloc avec la bascule (214), en particulier le couplage bras oscillant (210) comprenant au moins un troisième dispositif de rappel, au moyen duquel la bascule (214) et/ou le levier (216, 216') peut être forcée dans au moins une troisième position, le troisième dispositif de rappel comprenant de préférence au moins un ressort de torsion, au moins un ressort à boudin , au moins un ressort de traction, au moins un ressort de poussée, au moins un ressort de cisaillement, au moins un élément élastique en caoutchouc, au moins un ressort en volute et/ou au moins un ressort à gaz.

9. Véhicule selon la revendication 8, **caractérisé en ce que**
(i) le couplage bras oscillant (210) comporte au moins un dispositif amortisseur, un mouvement, particulièrement du levier (216, 216'), du rouleau de support (30, 30') et/ou de la bascule (214), autour de l'axe de rotation (D) pouvant être amorti au moyen du dispositif amortisseur, et/ou
(ii) le véhicule est **caractérisé par** au moins un organe de commande qui est relié de manière fonctionnelle, en particulier au dispositif d'amortissement, dans lequel un mouvement, en particulier du levier (216, 216'), du rouleau de support (30, 30') et/ou de la bascule (214), autour de l'axe de rotation (D) peut être réduit, de préférence supprimé, par l'organe de commande, l'organe de commande étant, au moins par zones, de préférence, comprend par l'amortisseur.

10. Véhicule selon la revendication 9, **caractérisé en ce que**
le dispositif d'amortissement et/ou l'organe de commande comprend au moins un cylindre, en particulier un cylindre hydraulique (250), avec au moins un piston (252) mobile à l'intérieur du cylindre, le cylindre comportant le levier (216, 216'), le rouleau de support (30, 30'), en particulier l'élément de palier, et/ou la bascule (214), de préférence par l'intermédiaire d'un élément de liaison (230) s'étendant au moins dans une direction radiale par rapport à l'axe de rotation (D), et le piston (252) est relié de manière opérationnelle à la structure portante ou le piston (252) est relié de manière opérationnelle au levier (216, 216'), à la bascule (214), au rouleau porteur (30, 30'), à l'élément de palier et/ou à l'élément de liaison (230) et le cylindre est relié de manière opérationnelle à la structure porteuse.

11. Véhicule selon la revendication 10, **caractérisé en ce que**
l'organe de commande comprend au moins un élément de commande, l'élément de commande comprenant de préférence au moins une soupape de commande et/ou, au moyen de la fermeture de l'élément de commande, un mouvement du dispositif amortisseur et/ou de l'élément de commande et/ou un mouvement, en particulier de la bascule (214), du levier (216), 216') et/ou le rouleau de support (30, 30'), autour de l'axe de rotation (D) est empêché et, lorsque l'élément de commande est ouvert, un mouvement du dispositif amortisseur et/ou de l'organe de commande et/ou un mouvement, en particulier de la bascule (214), du levier (216, 216') et/ou du rouleau de support (30, 30'), autour de l'axe de rotation (D) est libéré..

12. Véhicule selon la revendication 11, **caractérisé en ce que**
(i) le cylindre comprend de préférence un cylindre à simple effet et l'élément de commande comprend un élément d'étranglement (258) adapté pour commander le débit d'au moins un fluide, de préférence un fluide hydraulique, un gaz et/ou de l'air dans le cylindre, de préférence pour permettre un amortissement, de préférence l'élément de commande étant adapté pour commander l'élément d'étranglement (258) en fonction de la force d'appui captée par le dispositif capteur pour augmenter la pression du fluide pour éviter une réduction de la force d'appui sous une valeur prédéterminée, ou
(ii) le cylindre, en particulier le cylindre hydraulique (250), comporte au moins deux chambres de cylindre (254, 256) qui peuvent être reliées entre elles par au moins un étrangleur, le fluide étant particulièrement mobile entre les chambres de cylindre (254, 256), particulièrement par mouvement du piston (252).

13. Véhicule selon la revendication 9, **caractérisé en ce que**
l'élément de commande comprend au moins un moyen de freinage (262), en particulier un frein électromagnétique, un frein mécanique, un frein fonctionnant de manière adhésive et/ou positive, le moyen de freinage étant relié de manière fonctionnelle, de préférence d'une part, à la bascule (214) et/ou Rouleau de support (30, 30') et/ou, d'autre part, à la structure portante, de préférence sous forme de frein (262), en particulier un frein électromagnétique, un frein mécanique, un frein agissant de manière adhésive et/ou positive, le moyen de freinage étant relié de manière fonctionnelle, de préférence d'une part au bascule (214)
(a) le moyen de freinage (262) est disposé au moins dans des zones, de préférence circulaire autour de l'axe de rotation (D) de le couplage bras oscillant (210), et/ou
b) le véhicule est **caractérisé par** au moins un dispositif de commande relié en fonctionnement à l'organe de commande et/ou au dispositif d'amortissement, le dispositif de commande comprenant au moins une alimentation, en particulier une alimentation électrique et/ou un dispositif de stockage et/ou d'émission d'énergie mécanique, du moyen de freinage (262), et dans laquelle, lorsque de l'énergie est fournie par le dispositif de commande à l'organe de commande, un mouvement du dispositif d'amortissement et/ou de l'organe de commande et/ou un mouvement, en particulier de la bascule (214) et/ou du rouleau de support (30, 30'), autour de l'axe de rotation (D) est empêché , et en cas d'interruption de la fourniture d'énergie, un mouvement du dispositif d'amortissement et/ou de l'organe de commande et/ou un mouvement, en particulier de la bascule (214) et/ou du rouleau de support (30, 30'), autour de l'axe de rotation (D) est déclenché.

14. Véhicule selon à l'une quelconque des revendications 7 à 13, **caractérisé par** au moins un appareil de commande qui est relié de manière opérationnelle au dispositif capteur (190), au dispositif capteur de position, au appareil de commande et/ou à l'organe de commande, de préférence à l'élément de commande, dans laquelle l'organe de commande peut de préférence être influencé au moyen du appareil de commande de telle sorte que le mouvement autour de l'axe de rotation (D) soit réduit, de préférence empêché, lorsqu'une force d'appui correspondant à un contact manquant entre le rouleau de support (30, 30') et le sol est mesurée au moyen du dispositif capteur (190) et/ou le mouvement autour de l'axe de rotation (D) est au moins partiellement libéré lorsqu'une force d'appui correspondant à un contact existant entre le rouleau support (30, 30') et le sol est détectée au moyen du dispositif capteur (190),en particulier le appareil de commande influençant l'organe de commande en fonction d'une position d'au moins une fourche de levage du véhicule, notamment par rapport au sol, une vitesse du véhicule et/ou un angle de braquage du véhicule.

15. Véhicule selon l'une quelconque des revendications 7 à 14, **caractérisé en ce que**
(i) l'élément de commande comprend au moins un moyen de pompe pour augmenter une pression de fluide dans le cylindre, en particulier les chambres de cylindre (254, 256), de préférence le dispositif de commande étant adapté pour commander le moyen de pompe en fonction de la force d'appui détectée par le moyen de détection (190) afin d'augmenter la pression du fluide pour éviter une réduction de la force d'appui au-dessous d'une valeur prédéterminée,
(ii) le véhicule est **caractérisé par** une pluralité de rouleaux de support (30, 30') selon l'une des revendications 1 à 6, la bascule d'accouplement (210) comprenant de préférence une pluralité de leviers (216, 216') disposés de préférence sur la bascule (214), entourés par la bascule (214) et/ou formés au moins dans des régions faisant corps avec la bascule (214), et/ou iii) le véhicule est conçu comme un chariot élévateuret/ou comme un transpalette avec au moins une roue motrice, en particulier un transpalette à cinq roues motrices.

16. Procédé (1000) de stabilisation d'un véhicule, en particulier d'un véhicule selon l'une des revendications 7 à 15, comprenant un couplage bras oscillant (210) et au moins un rouleau de support (30, 30'), en particulier un rouleau de support (30, 30') selon une des revendications 1 à 6, comprenant les étapes :
la détection (1010) d'une force d'appui avec laquelle le rouleau de support (30, 30') est supporté sur un substrat, dans laquelle, dans au moins une première force d'appui, le rouleau de support (30, 30') est en contact avec le sol et dans au moins une seconde force d'appui, le rouleau de support (30, 30') n'est en contact avec le sol ; et
Commande (1020) d'un organe de commande (250) en fonction de la force d'appui détectée, une rotation du le couplage bras oscillant (210) et/ou du rouleau de support (30, 30') autour d'un axe de rotation (D) étant empêchée au moins partiellement au moyen de l'organe de commande lorsque la seconde force d'appui est détectée.

17. Procédé (1000) selon la revendication 16, **caractérisé en ce que**
a) lors de la détection de la première force d'appui, un mouvement autour de l'axe de rotation (D) est amorti au moyen d'au moins un dispositif amortisseur,
b) l'amortissement et la suppression du mouvement autour de l'axe de rotation (D) sont effectués au moyen d'un dispositif qui, au moins dans certaines régions, comprend l'organe de commande et le dispositif d'amortissement, en particulier le dispositif d'amortissement et l'organe de commande, sont formés intégralement au moins dans certaines régions, et/ou
c) la suppression du mouvement autour de l'axe de rotation (D) est obtenue en supprimant un mouvement du dispositif amortisseur et/ou d'au moins un tiers du dispositif de rappel.
